(19) Europäisches Patentamt
European Patent Office
Office européen des brevets

(11) **EP 2 953 220 B1**

(12) **EUROPÄISCHE PATENTSCHRIFT**

(45) Veröffentlichungstag und Bekanntmachung des Hinweises auf die Patenterteilung:
**21.06.2017 Patentblatt 2017/25**

(51) Int Cl.:
**H02G 1/10** *(2006.01)*    **H02G 9/02** *(2006.01)*

(21) Anmeldenummer: **14196156.5**

(22) Anmeldetag: **03.12.2014**

(54) **SCHUTZANORDNUNG FÜR DIE VERLEGUNG VON SEEKABELN**

PROTECTIVE ASSEMBLY FOR LAYING SEA CABLES

DISPOSITIF DE PROTECTION POUR LA POSE DE CÂBLES SOUS-MARINS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.06.2014 DE 202014102569 U**

(43) Veröffentlichungstag der Anmeldung:
**09.12.2015 Patentblatt 2015/50**

(73) Patentinhaber: **STALVOSS GmbH & Co. KG**
**51103 Köln (DE)**

(72) Erfinder: **Duman, Ali**
**51491 Overath (DE)**

(74) Vertreter: **Lippert Stachow Patentanwälte Rechtsanwälte Partnerschaft mbB**
**Postfach 30 02 08**
**51412 Bergisch Gladbach (DE)**

(56) Entgegenhaltungen:
**EP-A2- 0 226 188       FR-A1- 2 971 322**
**GB-A- 823 569         JP-A- 2002 171 655**
**JP-A- 2008 245 341**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Schutzanordnung zum Aufnehmen und Schützen eines Kabelabschnitts eines Seekabels bei dem Verlegen des Seekabels gemäß dem Oberbegriff von Anspruch 1.

Herkömmlicherweise werden Seekabel, wie beispielsweise Anschlusskabel von Offshore-Windparks, über Kabelverlegeschiffe auf dem Meeresboden abgelegt. Entsprechende Seekabel sind dazu ausgelegt, den extremen Bedingungen am Meeresboden über viele Jahrzehnte hinweg unbeschadet zu widerstehen. Außerdem sind solche Seekabel in hohem Maße multifunktional ausgelegt, damit durch ein Seekabel sämtliche Anschluss- und Versorgungsmöglichkeiten, unter anderem beispielsweise auch das Bereitstellen von Steuerleitungen, gegeben sind, so dass das aufwendige Verlegen von Seekabeln nicht häufiger als unbedingt erforderlich durchgeführt werden muss. Bei dem Verlegen von Anschlusskabeln für Offshore-Windparks muss darüber hinaus ein sehr großer Leitungsquerschnitt für eine Stromführung in dem Anschlusskabel gewährleistet sein, damit im Windpark erzeugte Energie über das Anschlusskabel abgeführt werden kann. Wegen der besonderen an sie gestellten Anforderungen weisen Seekabel besondere Eigenschaften, insbesondere besondere Abmessungen auf. Üblicherweise weisen Seekabel einen Durchmesser von ca. 20 cm bis 30 cm und ein Gewicht von ca. 100 kg bis 200 kg pro laufendem Meter auf. Wegen dieser Eigenschaften eines Seekabels sind besondere Vorkehrungen zu treffen, damit das Seekabel nicht durch sein Eigengewicht während des Verlegens des Seekabels beschädigt wird. Dies gilt insbesondere bei dem Ablegen eines Verbindungsabschnitts zwischen zwei Seekabelabschnitten, in dem die beiden Seekabelabschnitte miteinander verbunden sind. Die beiden Seekabelabschnitte werden üblicherweise vor Ort auf einem Verlegeschiff über eine Seekabelmuffe miteinander verbunden. Nach dem Verbinden der beiden Seekabelabschnitte miteinander muss der Verbindungsabschnitt umfassend die Seekabelmuffe auf dem Meeresboden abgelegt werden. Wegen des erheblichen Eigengewichts der Seekabelabschnitte kann der Verbindungsabschnitt nicht ohne Weiteres über einen Krahn angehoben und auf dem Meeresboden abgesetzt werden. Dabei ist zu berücksichtigen, dass der Verbindungsabschnitt über ca. 50 m bis 100 m durch das Wasser auf dem Meeresboden geführt werden muss, so dass zum Beginn des Verlegens, d. h. wenn der Verbindungsabschnitt mit der Seekabelmuffe über einen Krahn von dem Verlegeschiff angehoben wird, zumindest an einer Seite des Verbindungsabschnitts über 50 m an Seekabel hängen. Werden keine speziellen Schutzvorkehrungen getroffen, erfahren die Seekabelabschnitte Brüche oder Risse, so dass das Seekabel beschädigt wird.

Vor diesem Hintergrund wurden herkömmliche Schutzanordnungen zum Aufnehmen und Schützen eines Kabelabschnitts eines Seekabels bei dem Verlegen des Seekabels entwickelt. Herkömmliche Schutzanordnungen umfassen mehrere Stützschalen, die jeweils einen hohlzylinderartigen Schalenabschnitt aufweisen, der sich axial über eine Schalenlänge zwischen zwei Schalenflanschen erstreckt. Die Stützschalen werden axial nebeneinander an einem Seekabel angeordnet, wobei das Seekabel radial innerhalb des hohlzylinderartigen Schalenabschnitts der Stützschalen verläuft und somit durch die Stützschalen geschützt ist.

Indem die Stützschalen über ihre Schalenflansche mit Schrauben verbunden werden, die ein gewisses Bewegungsspiel zwischen den über sie verbundenen Stützschalen zulassen, kann einer zu starken Belastung des Seekabels bei dem Verlegen des Seekabels, insbesondere bei dem Ablegen eines Seekabels von einem Verlegeschiff auf den Meeresboden verhindert werden. Denn die miteinander verbundenen Stützschalen sind zum Tragen des Seekabels ausgebildet, wobei über die Verbindung der Stützschalen mittels Schrauben sichergestellt ist, dass sich die benachbarten Stützschalen zueinander nur leicht abwinkeln können. Das bei dem Verlegen mit seinem Eigengewicht belastete Seekabel kann somit unter Gewährleistung eines geringen Krümmungsradius des Seekabels verlegt werden, insbesondere auf dem Meeresboden abgelegt werden. Dadurch kann eine übermäßige Belastung des Seekabels bzw. eines Kabelabschnitts des Seekabels vermieden werden. Ferner sind Schutzanordnungen bekannt, die um ein Seekabel herum angeordnet werden, nachdem dieses Seekabel auf einem Meeresboden abgelegt wurde, damit bei einem Wellengang eine Reibung zwischen Meeresboden und Seekabel möglichst verhindert wird. Eine solche Schutzanordnung ist in dem Dokument JP 2008-245341A beschrieben. Bei dieser Schutzanordnung sind jeweils zwei benachbarte Stützschalen über eine Gelenkmuffe so miteinander verbunden, dass sie zueinander in verschiedenen Richtungen mit erheblichem Spiel bewegt werden können, damit die Schutzanordnung auch bei unebenem Meeresboden unproblematisch verwendet werden kann.

Herkömmliche Schutzanordnungen weisen jedoch mehrere Nachteile auf. Zum einen ist das Verbinden benachbarter Stützschalen über Schrauben zeitaufwendig. Da wegen der hochentwickelten Ausrüstung, die für das Verlegen von Seekabeln erforderlich ist, jeder Zeitverlust mit sehr hohen Kosten verbunden ist, verursachen herkömmliche Schutzanordnungen eine erhebliche Verteuerung der Verlegekosten. Zum anderen schützen herkömmliche Schutzanordnungen einen Kabelabschnitt eines Seekabels nur unzureichend, da die Schraubenverbindung zwischen den Stützschalen fehleranfällig ist. Denn die Schraubenverbindungen müssen gerade so ausgestaltet sein, dass sie eine sichere Fixierung zweier benachbarter Stützschalen ermöglichen und gleichzeitig ein geringfügiges Abwinkeln der beiden benachbarten Stützschalen zueinander zulassen. Wegen dieses Kompromisses sind die Schraubenverbindungen nicht dazu ausgelegt, hohe Belastung, die beispielsweise bei einer hohen Verlegehöhe, d. h. einer hohen Meerestiefe, oder bei ruckartigen Belastungen wie etwa hohem Wellengang, entstehen können, Stand zu halten. Bei solchen hohen Belastungen kommt es häufig zu einem Aufbrechen des Schraubenverbindungen, was zu einer Beschädigung des zu schützenden Kabelabschnitts führt. Somit ist über herkömmliche Schutzanordnungen keine hinreichend zuverlässige, mit einem geringen Ausfallrisiko verbundene Verlegung von Seekabeln möglich. Wegen der sehr hohen Verlegekosten, insbesondere der sehr hohen Kosten für einen laufenden Meter eines Seekabels, kann dies zu einer erheblichen Erhöhung der Verlegekosten führen.

Der vorliegenden Erfindung liegt die Aufgabe zugrunde, eine Schutzanordnung zum Aufnehmen und Schützen eines Kabelabschnitts eines Seekabels bereitzustellen, die die Nachteile herkömmlicher Schutzanordnungen zumindest teilweise behebt.

Als eine Lösung der genannten technischen Aufgabe schlägt die Erfindung eine Schutzanordnung mit den Merkmalen von Anspruch 1 vor. Die Schutzanordnung ist dazu geeignet, einen Kabelabschnitt bei einer Aufhängung der Schutzanordnung an einem Hebearm zu tragen. Die Schutzanordnung umfasst zumindest zwei Stützschalen, von denen eine jede einen hohlzylinderartigen Schalenabschnitt aufweist, der sich axial über eine Schalenlänge zwischen zwei Schalenflanschen erstreckt. Die Achse des Schalenabschnitts gibt die Achse der Stützschale vor und entspricht der Achse der Stützschale. Der hohlzylinderartige Schalenabschnitt ist zur Aufnahme eines Kabelabschnitts eines Seekabels geeignet. Hierzu ist der Schalenabschnitt innen hohl, so dass der Kabelabschnitt radial innerhalb des Schalenabschnitts und radial von dem Schalenabschnitt umgeben angeordnet werden kann, wobei sich der Kabelabschnitt axial durch den Schalenabschnitt hindurch erstreckt. Der hohlzylinderartige Schalenabschnitt ist dabei an seinen beiden axialen Enden offen, damit sich ein Seekabel durch den Schalenabschnitt hindurch erstrecken kann. Die beiden Schalenflansche sind an den beiden axialen Enden des Schalenabschnitts angeordnet. Jeder der Schalenflansche erstreckt sich axial über eine Schalenflanschlänge. Die beiden Schalenflansche können dieselbe Schalenflanschlänge aufweisen. Die beiden Schalenflansche können, insbesondere in ihrem axial verlaufenden Querschnitt, identisch ausgebildet sein. Dabei sind die Schalenflansche in ihrer Eigenschaft als Flansch als radialer Vorsprung an dem Schalenabschnitt ausgebildet, der sich radial von der Mantelfläche des Schalenabschnitts weg erstreckt. Beispielsweise kann einen Schalenflansch sich radial nach außen von dem Schalenabschnitt weg erstrecken. Beispielsweise kann sich ein Schalenflansch radial zum Innenraum des Schalenabschnitts hin erstrecken. Das Vorsehen von Schalenflanschen, die sich radial nach außen von dem Schalenabschnitt weg erstrecken, kann in manchen Ausführungsformen besonders vorteilhaft sein, insbesondere da ein Kabelabschnitt innerhalb des Schalenabschnitts über einer gerade Fläche ohne Vorsprünge verlaufen kann, wodurch einer Beschädigung des Kabelabschnitts besonders gut vorgebeugt sein kann.

Eine erfindungsgemäße Schutzanordnung zeichnet sich dadurch aus, dass die Schutzanordnung zumindest eine Gelenkmuffe umfasst, die zum Verbinden von zwei axial benachbarten Stützschalen unter Fixierung deren benachbarter Schalenflansche zueinander ausgebildet ist. Die Gelenkmuffe ist somit dazu ausgebildet, zwei Stützschalen, die mit ihren Schalenflanschen aneinander anliegen, miteinander zu verbinden, indem sie die beiden aneinander anliegenden Schalenflansche der beiden Stützschalen zueinander fixiert. Die Fixierung kann dabei dergestalt ausgebildet sein, dass zwischen den fixierten Schalenflanschen ein gewisses Spiel ermöglicht ist, die Schalenflansche sich jedoch nur innerhalb dieses Spiels zueinander bewegen können. Somit kann über die Gelenkmuffe durch die Fixierung der Schalenflansche zweier benachbarter Stützschalen ein Entkoppeln der beiden Stützschalen voneinander verhindert sein und stattdessen eine Kopplung zwischen den beiden Stützschalen stets gewährleistet sein. Dabei weist die Gelenkmuffe einen hohlzylinderartigen Muffenabschnitt auf, der sich axial über eine Muffenlänge zwischen zwei Muffenflanschen erstreckt. Der Muffenabschnitt ist an seinen beiden axialen Enden offen, damit sich ein Kabelabschnitt axial durch den Muffenabschnitt hindurch erstrecken kann, während er radial von dem Muffenabschnitt umgeben ist. Die Muffenflansche sind an den axialen Enden des Muffenabschnitts angeordnet. Die Achse des Muffenabschnitts gibt die Achse der Gelenkmuffe vor und entspricht der Achse der Gelenkmuffe.

Die Gelenkmuffe und die Stützschalen sind dergestalt miteinander korrespondierend ausgebildet, dass zum zueinander Fixieren der Schalenflansche der beiden Stützschalen durch die Gelenkmuffe die Schalenflansche der zwei axial benachbarten Stützschalen axial zueinander verschiebbar axial innerhalb der Muffenlänge anordenbar sind, wobei die Muffenflansche die axiale Verschiebbarkeit der Schalenflansche zueinander begrenzen, wobei die Muffenlänge um eine Spiellänge länger ist als die gemeinsame axiale Schalenflanschlänge der beiden axial benachbarten Stützschalen, wobei die Spiellänge durch die Muffenlänge und die Schalenflanschlängen der beiden axial innerhalb der Muffenlänge der Gelenkmuffe angeordneten Schalenflansche festgelegt ist und als der axiale Abstand zwischen den beiden benachbarten Schalenflanschen definiert ist, um den sie an ihren ersten radialen Enden maximal voneinander beabstandet sein können, wenn ihre den ersten radialen Enden radial gegenüberliegenden zweiten radialen Enden aneinander anliegen, während sie über die Gelenkmuffe zueinander fixiert sind, wobei die Spiellänge zwischen einem Zehntel und einem Drittel des Schalenflanschdurchmessers beträgt, wobei über die Spiellänge eine Verschiebbarkeit der Schalenflansche und ein Winkel festgelegt ist, bis zu dem die beiden über die Gelenkmuffe miteinander verbundenen benachbarten Stützschalen mit ihren Achsen zueinander um eine radiale Richtung abwinkelbar sind, wodurch eine Verbiegung des in den Stützschalen verlaufenden Kabelabschnitts auf einen entsprechenden Biegewinkel beschränkt ist. Beispielsweise kann die Gelenkmuffe radial von außen an den Schalenflanschen der benachbarten Stützschalen anordenbar sein, wobei die Schalenflansche axial innerhalb der Muffenlänge angeordnet sind und sich innerhalb der Muffenlänge zwischen den Muffenflanschen zueinander verschieben können. In dieser Ausführungsform ist der Durchmesser des Muffenabschnitts größer als der äußere Durchmesser der Schalenflansche, damit der Muffenabschnitt radial von außen an den Schalenflanschen anordenbar ist. Dagegen ist der innere Durchmesser der Muffenflansche geringere als der äußere Durchmesser der Schalenflansche, damit die Muffenflansche die Verschiebbarkeit der Schalenflansche effektiv begrenzen können. Beispielsweise können die Muffenflansche als radialer Vorsprung an dem Muffenabschnitt vorgesehen sein, der sich von der Mantelfläche des Muffenabschnitts radial zum Innenraum des Muffenabschnitts hin erstreckt. In einer Ausführungsform sind die Stützschalen radial von außen an der Gelenkmuffe anordenbar. Die Muffenflansche können beispielsweise als radial von dem Mantel des Muffenabschnitts nach außen vorstehender Vorsprung ausgebildet sein. In jedem Fall korrespondieren die Muffenflansche und die Schalenflansche zweier benachbarter Stützschalen dergestalt, dass bei dem Anordnen der Gelenkmuffe an den Schalenflanschen der benachbarten Stützschalen die Verschiebbarkeit der Schalenflansche auf die Muffenlänge zwischen den Muffenflanschen beschränkt ist.

Die erfindungsgemäße Schutzanordnung ist besonders einfach an einem Kabelabschnitt montierbar und gewährleistet einen besonders zuverlässigen Schutz des Kabelabschnitts. Zum einen ist über die Gelenkmuffe eine sichere und schnelle Verbindung zwischen zwei benachbarten Stützschalen herstellbar. Zum anderen ist durch die axiale Verschiebbarkeit der Schalenflansche innerhalb der Muffenlänge eine Beweglichkeit der über die Gelenkmuffe miteinander verbundenen benachbarten Stützschalen gewährleistet, so dass sich die beiden benachbarten Stützschalen zueinander abwinkeln können und somit eine Verbiegung eines in den miteinander über die Gelenkmuffe verbundenen Stützschalen verlaufenden Kabelabschnitts ermöglicht ist. Durch die Beschränkung der Verschiebbarkeit der Schalenflansche innerhalb der Muffenlänge durch die Muffenflansche ist der mögliche Winkel, in dem die benachbarten Stützschalen zueinander abgewinkelt werden können, effektiv beschränkt, so dass auch eine Verbiegung eines in den Stützschalen verlaufenden Kabelabschnitts auf einen entsprechenden Biegewinkel beschränkt ist. Somit gewährleistet die erfindungsgemäße Schutzanordnung einen zuverlässigen Schutz eines Kabelabschnitts eines Seekabels und ist zum Tragen eines solchen Kabelabschnitts geeignet, indem die Schutzanordnung an einem Hebearm aufgehängt wird. Somit eignet sich die erfindungsgemäße Schutzanordnung besonders gut zum Verlegen eines Seekabels, da über die erfindungsgemäße Schutzanordnung das gezielte Ablegen eines Seekabels auf einem Meeresboden gewährleistet sein kann, wobei ein bestimmter, über die korrespondierende Ausbildung von Stützschalen und verbindender Gelenkmuffe festgelegter Biegewinkel des in der Schutzanordnung geführten Kabelabschnitts nicht überschritten werden kann. Die einfache Verbindung zwischen Gelenkmuffe und den beiden benachbarten Stützschalen kann auf verschiedene Art und Weise realisiert werden. Beispielsweise kann die Gelenkmuffe über Halbschalen oder Viertelschalen realisiert sein, die radial von außen über die Schalenflansche geschraubt werden. Beispielsweise können die Stützschalen über Halbflansche oder Viertelflansche realisiert sein, die radial von außen über der Gelenkmuffe angeordnet werden. In einer Ausführungsform umfassen die Stützschale und/oder die Gelenkmuffe einen Rohrabschnitt. In einer Ausführungsform sind Gelenkmuffe und Stützschalen so zueinander korrespondierend ausgebildet, dass die Stützschalen in die Gelenkmuffe gesteckt werden können. Beispielsweise kann nach dem Steckverbinden von Gelenkmuffe mit Stützschalen eine Kompression von außen auf die Gelenkmuffe oder die Stützschalen über ein Kompressionswerkzeug erfolgen, wodurch ein Auseinandergleiten von Gelenkmuffe und Stützschalen besonders wirksam vermieden sein kann. Beispielsweise kann ein Rastmechanismus zwischen Gelenkmuffe und Stützschalen vorgesehen sein.

In einer Ausführungsform weist zumindest eine der Stützschalen und/oder die Gelenkmuffe eine Aufhängungslasche auf, die außen an dem hohlzylinderartigen Schalenabschnitt bzw. dem hohlzylinderartigen Muffenabschnitt angeordnet ist. Die Aufhängungslasche weist eine Öse auf, so dass die Stützschale bzw. Gelenkmuffe mittels der Aufhängungslasche einfach an einem Hebearm befestigt werden kann, beispielsweise über eine Montagekette. Die Aufhängungslasche kann beispielsweise als Flachstahl mit einer Öse ausgebildet sein, der an der Stützschale bzw. Gelenkmuffe angeschweißt ist. Die Aufhängungslasche kann beispielsweise über einen um die Stützschale bzw. die Gelenkmuffe verlaufenden Flachstahl realisiert sein, wobei der Flachstahl an einem über die Stützschale bzw. Gelenkmuffe herausragenden Ende die Öse aufweist.

In einer Ausführungsform umfasst zumindest eine der Stützschalen zwei Stützhalbschalen, die jeweils zwei axial verlaufende Stützstege aufweisen, über die die beiden Stützhalbschalen radial aneinander anliegend miteinander verbunden sind. In einer Ausführungsform umfasst zumindest eine der Gelenkmuffen zwei Muffenhalbschalen, die jeweils zwei axial verlaufende Muffenstege aufweisen, über die die beiden Muffenhalbschalen radial aneinander anliegend miteinander verbunden sind. Die radiale Richtung ist dabei stets als Richtung senkrecht zur axialen Erstreckung des Schalenabschnitts bzw. des Muffenabschnitts zu verstehen. Die beiden Stützstege einer Stützhalbschale müssen nicht zwingend identisch sein. Die beiden Muffenstege einer Muffenhalbschale müssen nicht zwingend identisch sein. Allerdings sind die Stützstege der beiden Stützhalbschalen so zueinander korrespondierend ausgebildet, dass die Stützhalbschalen über ihre Stützstege miteinander verbindbar sind. Dasselbe gilt für die Muffenstege. Beispielsweise können die Stützstege jeweils Bohrungen aufweisen, wobei in der über die beiden Stützhalbschalen realisierten Stützschale die Bohrungen fluchtend einander gegenüberliegen, wobei die Stützstege der beiden Stützhalbschalen über Befestigungsmittel, wie etwa Schrauben oder Nieten, zueinander fixiert sein können. Beispielsweise können sämtliche Stützstege der Stützhalbschalen einer Stützschale identisch ausgebildet sein. In einem Ausführungsbeispiel können ein Stützsteg einer ersten Stützhalbschale und ein Stützsteg einer zweiten Stützhalbschale so zueinander korrespondierend ausgebildet sein, dass sie ineinander gesteckt werden können zum Ausbilden einer Gelenkverbindung, während die anderen beiden Stützstege der beiden Stützhalbschalen Bohrungen aufweisen, über die die beiden Stützstege miteinander über Befestigungsmittel verbunden werden können. Dasselbe gilt für die Muffenstege. Die Stützhalbschalen bzw. die Muffenhalbschalen können beispielsweise Schalenhalbabschnitte bzw. Muffenhalbabschnitte aufweisen, an denen Schalenhalbflansche bzw. Muffenhalbflansche angeordnet sind. Die Stützhalbschalen können gemeinsam die Sützschale ausbilden, die Schalenhalbabschnitte können gemeinsam den Schalenabschnitt ausbilden, die Schalenhalbflansche können gemeinsam den Schalenflansch ausbilden. Dasselbe gilt analog für die Gelenkmuffe. Durch das Vorsehen von Stützhalbschalen bzw. Muffenhalbschalen mit Stützstegen bzw. Muffenstegen kann eine besonders robuste und einfach zu montierende Ausgestaltung der Schutzanordnung realisiert sein. Denn die Halbschalen können einfach radial außen um einen Kabelabschnitt gelegt werden und über die Stege fest miteinander verbunden werden. Dabei sind nur stets zwei Bauteile zur Realisierung der Stützschale bzw. zwei Bauteile zur Realisierung der Gelenkmuffe erforderlich. Dabei müssen Stützschale und Gelenkmuffe nicht axial auf einen Kabelabschnitt aufgeschoben werden, sondern können an der gewünschten Stelle radial von außen auf den Kabelabschnitt aufgebracht werden. Insbesondere lässt sich die Verbindung von zwei benachbarten Stützschalen über die Gelenkmuffe besonders einfach realisieren, indem die Muffenhalbschalen von außen über die benachbarten Stützschalen oder die Stützhalbschalen von außen über die Gelenkmuffe angeordnet werden. In einer Ausführungsform sind Muffenstützbleche vorgesehen, über die die Muffenstege an dem Muffenabschnitt abgestützt sind. In einer Ausführungsform sind Schalenstützbleche vorgesehen, über die die Stützstege an dem Schalenabschnitt abgestützt sind. Über entsprechende Stützbleche kann eine besonders stabile Anordnung der Stützstege bzw. Muffenstege an dem Schalenabschnitt bzw. Muffenabschnitt realisiert sein, wodurch ein besonders robustes und zuverlässiges Fixieren der Stützhalbschalen bzw. der Muffenhalbschalen zueinander realisierbar sein kann.

In einer Ausführungsform ist einer der Stützstege einer jeden Stützhalbschale als Aufhängungssteg ausgebildet, der eine Ausnehmung aufweist, wobei die Aufhängungsstege der beiden Stützhalbschalen in der Stützschale so aneinander angeordnet sind, dass ihre Ausnehmungen fluchten. Die Ausnehmung kann beispielsweise zur Aufnahme einer Montagekette oder einer Halterung für eine Montagekette ausgebildet sein, so dass über die Ausnehmungen in den Aufhängungsstegen der beiden Stützhalbschalen eine Halterung der Stützhalbschale über eine Montagekette ermöglicht ist. Dadurch kann beispielsweise über die Ausnehmung gewährleistet sein, dass die Stützhalbschale mit einem Hebearm, wie etwa einem Krahn, verbindbar ist, über den dann ein in der Schutzanordnung verlaufende Kabelabschnitt zum Verlegen eines Seekabels auf dem Meeresboden abgelegt werden kann. In einer Ausführungsform ist eine Verstärkungsplatte vorgesehen, die eine Verstärkungsausnehmung aufweist, wobei die Verstärkungsplatte mit ihrer Verstärkungsausnehmung fluchtend über die Ausnehmung an dem Aufhängungssteg angeordnet ist. Über die Verstärkungsplatte kann besonders zuverlässig sichergestellt sein, dass der Aufhängungssteg bei dem Durchführen einer Halterung durch die Ausnehmung und dem Anheben der Schutzanordnung mit einem darin geführten Kabelabschnitt nicht beschädigt wird, so dass ein in der Schutzanordnung geführter Kabelabschnitt sicher und zuverlässig über einen Hebearm, der an der Ausnehmung angreift, beispielsweise über eine Montagekette, auf einem Meeresboden verlegbar ist.

Vorzugsweise ist der innere Durchmesser des Muffenabschnitts größer als der äußere Durchmesser der Schalenflansche der beiden axial benachbarten Stützschalen, wobei der äußere Durchmesser dieser Schalenflansche größer ist als der innere Durchmesser der Muffenflansche. Der Durchmesser verläuft dabei senkrecht zur Achse des Schalenabschnitts bzw. zur Achse des Muffenabschnitts. In dieser Ausführungsform ist die Gelenkmuffe radial außerhalb der benachbarten Schalenflansche der benachbarten Stützschalen angeordnet. Dabei weisen die Muffenflansche von der Mantelfläche des Muffenabschnitts zum Inneren des Muffenabschnitts, während die Schalenflansche von der Mantelfläche des Schalenabschnitts nach außen weisen. Bei der beschriebenen Ausführungsform kann gewährleistet sein, dass ein Kabelabschnitt über einen besonders weiten Bereich an einer glatten Fläche ohne Vorsprünge in der Schutzanordnung anliegen kann, wodurch einer Beschädigung des Kabelabschnitts besonders gut vorgebeugt sein kann.

Vorzugsweise weisen die Schalenflansche abgeschrägte axiale Enden auf. Dabei ist auf die axialen Enden an der von dem Schalenabschnitt wegweisenden Seite der Schalenflansche abgestellt. Ein jeder Schalenflansch kann ein abgeschrägtes axiales Ende aufweisen oder zwei abgeschrägte axiale Enden. Insbesondere können die axialen Enden abgerundet sein. Dadurch kann gewährleistet sein, dass die Schalenflansche bei einem Verkippen der benachbarten Stützschalen zueinander axial innerhalb der Muffenlänge an den Muffenflanschen und/oder aneinander mit einer großen Fläche anliegen können, wodurch eine besonders gute Führung der Schalenflansche durch die Muffenflansche realisiert sein kann. Insbesondere können die Schalenflansche mit einem solchem Winkel abgeschrägt sein, dass die Schalenflansche bei einer Anordnung der Schalenflansche axial innerhalb der Muffenlänge dergestalt, dass die Schalenflansche an einem ersten radialen Ende aneinander anliegen und an einem zweiten, gegenüberliegenden radialen Ende an den Muffenflanschen anliegen, mit ihren zweiten radialen Enden mit der abgeschrägten Fläche flächig an den Muffenflanschen anliegen und/oder mit ihren ersten radialen Enden mit der abgeschrägten Fläche aneinander anliegen. Der Winkel der abgeschrägten Fläche zu der Achse der Gelenkmuffe kann vorab hierzu gezielt eingestellt sein, da für die entsprechende gezielte Einstellung lediglich der Durchmesser der Schalenflansche sowie die Schalenflanschlänge und die Muffenlänge bekannt zu sein braucht, die bei der erfindungsgemäßen Schutzanordnung eindeutig vorgegeben sind.

Vorzugsweise weist zumindest einer der Muffenflansche zumindest eine sich axial über die Muffenflanschlänge erstreckende Aussparung auf zur Aufnahme eines an zumindest einer der beiden axial benachbart angeordneten Stützschalen angeordneten Vorsprungs. Insbesondere können beide der Muffenflansche eine solche Aussparung aufweisen. Insbesondere können einer oder beide der Muffenflansche zwei solche Aussparungen aufweisen, die sich in einer radialen Richtung gegenüberliegen. Die Aussparungen können, müssen aber nicht zwingend identisch zueinander ausgebildet sein. Die Stützschalen und die Gelenkmuffe sind dergestalt miteinander korrespondierend ausgebildet, dass die benachbarten Schalenflansche der benachbarten Stützschalen axial innerhalb der Muffenlänge angeordnet werden können und gleichzeitig ein Vorsprung, der an einer der Stützschalen angeordnet ist, in einer Aussparung eines der Muffenflansche angeordnet ist. Dadurch ist ein Verdrehen der Stützschale mit dem Vorsprung relativ zu der Gelenkmuffe um die Achse des Muffenabschnitts effektiv verhindert. Beispielsweise können beide Muffenflansche eine solche Aussparung aufweisen, sowie beide Stützschalen einen solchen Vorsprung, so dass beide Stützschalen an einer Verdrehung um die Achse des Muffenabschnitts gegenüber der Gelenkmuffe verhindert sind. Durch das Vorsehen der beiden sich radial gegenüberliegenden Aussparungen in einem oder beiden der Muffenflansche kann das relative Verdrehen besonders effektiv verhindert sein. Der Vorsprung kann beispielsweise integral in dem Schalenabschnitt vorgesehen sein. Beispielsweise kann der Vorsprung über die Stützstege ober einen Abschnitt der Stützstege der Stützhalbschalen realisiert sein, die aneinander anliegen. Dadurch kann der Vorsprung besonders einfach hergestellt sein und darüber hinaus eine hinreichende radiale Länge aufweisen, so dass eine Verdrehung zwischen Gelenkmuffe und Stützschale besonders effektiv verhindert sein kann. Bei manchen Ausführungsformen kann auf eine entsprechende Aussparung des Muffenflanschs und eine entsprechende Anordnung eines Vorsprungs an der Stützschale verzichtet sein. Bei einer solchen Ausführungsform kann eine besonders robuste Verbindung zwischen Stützschalen und Gelenkmuffe über die durchlaufenden Flansche gewährleistet sein und eine besonders einfache Montage der Schutzanordnung an einem Seekabelabschnitt ermöglicht sein, da die Stützschalen und die Gelenkmuffe in um ihre jeweiligen Achsen beliebig zueinander verdrehten Positionen aneinander angeordnet und miteinander fixiert werden können. Eine solche Ausführungsform eignet sich insbesondere für solche Anwendungsfälle, in denen ein Verdrehen von Stützschalen bzw. Gelenkmuffen zueinander um ihre Achsen tolerabel ist, beispielsweise bei der Verwendung eines ausreichend robusten Seekabels, das bei einer entsprechenden Verdrehung keine Beschädigung erfährt.

Die Muffenlänge ist um eine Spiellänge länger als die gemeinsame axiale Schalenflanschlänge der benachbarten Schalenflansche der beiden axial benachbarten Stützschalen, wobei die Spiellänge zwischen einem Zehntel und einem Drittel des Schalenflanschdurchmessers beträgt. Insbesondere kann die Spiellänge zwischen 40 mm und 80 mm liegen. Die Spiellänge ist durch die Muffenlänge und die Schalenflanschlängen der beiden axial innerhalb der Muffenlänge der Gelenkmuffe angeordneten Schalenflansche festgelegt. Die Spiellänge ist als der axiale Abstand zwischen den beiden benachbarten Schalenflanschen definiert, um den sie an ihren ersten radialen Enden maximal voneinander beabstandet sein können, wenn ihre den ersten radialen Enden radial gegenüberliegenden zweiten radialen Enden aneinander anliegen, während sie über die Gelenkmuffe zueinander fixiert sind. Über die Spiellänge ist die Verschiebbarkeit der Schalenflansche zueinander festgelegt. Damit ist über die Spiellänge auch der Winkel festgelegt, in dem die beiden über die Gelenkmuffe miteinander verbundenen benachbarten Stützschalen mit ihren Achsen zueinander um eine radiale Richtung abgewinkelt werden können. Die Erfinder haben erkannt, dass dieser Winkel $\varphi$ näherungsweise über die Relation

$$\varphi = \arcsin \frac{\Delta L}{2D}$$ beschrieben werden kann, wobei $\Delta L$

die Spiellänge und D den Durchmesser der Schalenflansche angeben, wobei die Erfinder erfindungsgemäß vorausgesetzt haben, dass der Winkel zwischen den beiden benachbarten Stützschalen dann den maximalen Wert annimmt, wenn die Schalenflansche axial innerhalb der Muffenlänge an einem radialen Ende aneinander anliegen und an ihrem gegenüberliegenden radialen Ende an den Muffenflanschen anliegen und über die Spiellänge voneinander beabstandet sind. Entsprechend haben die Erfinder erkannt, dass die Relation der Spiellänge zu dem Schalenflanschdurchmesser von besonderer Relevanz für die Vorgabe des maximalen Winkels $\varphi$ und damit auch für die Vorgabe eines maximalen Biegewinkels eines Kabels, das in der Schutzanordnung geführt ist, relevant ist. Für eine vorteilhafte Ausführungsform ist vorgesehen, dass die Stützschalen und die Gelenkmuffe so zueinander ausgebildet sind, dass die Quotient

$$\frac{L_0 * D}{\Delta L}$$

größer als 3000 mm, insbesondere größer als 4000 mm beträgt, wobei $L_0$ die Schalenlänge, $\Delta L$ die Spiellänge und $D$ den Außendurchmesser der Schalenflansche bezeichnet. Hierbei wird von der erfindungsgemäßen Näherung ausgegangen, dass der Biegeradius eines in der Schutzanordnung geführten Kabelabschnitts nur geringfügig größer ist als das Verhältnis $\dfrac{L_0}{2\sin\varphi}$.

Die Erfinder haben erkannt, dass unter Annahme eines bestimmten Seekabels mit einem bestimmten minimalen Biegeradius entsprechend bestimmte Anforderungen an die Stützschalen und die Gelenkmuffe zu stellen sind, damit ein in einer erfindungsgemäßen Schutzanordnung geführter Kabelabschnitt nicht so stark gebogen wird, dass Beschädigungen auftreten können. Durch die Vorgabe eines bestimmten Quotienten $\dfrac{L_0 * D}{\Delta L}$ kann besonders effektiv sichergestellt sein, dass ein solcher Biegeradius, der beispielsweise bei herkömmlichen Seekabeln mit einem Durchmesser von 280 mm nicht kleiner als 4100 mm sein sollte, nicht unterschritten wird.

In einer Ausführungsform umfasst die Schutzanordnung zumindest einen Adapter, der zum Gewährleisten einer Montage einer der Stützschalen an einer Seekabelmuffe ausgebildet ist. Hierbei wird von einer herkömmlichen bekannten Seekabelmuffe ausgegangen, über die herkömmlicherweise zwei Kabelabschnitte eines zu verlegenden Seekabels miteinander verbunden werden. Der Adapter weist einen Adapterabschnitt mit einer axialen Erstreckung auf, an dessen erstem axialen Ende ein Adapterflansch zum Fixieren des Adapters an der Seekabelmuffe angeordnet ist und an dessen zweitem axialen Ende ein Kopplungsflansch angeordnet ist. Die Achse des Adapterabschnitts gibt die Achse des Adapters vor und ist mit ihr identisch. Der Kopplungsflansch ist dergestalt korrespondierend zu der Gelenkmuffe ausgebildet, dass er zusammen mit dem Schalenflansch einer der Stützschalen axial innerhalb der Muffenlänge axial verschiebbar anordenbar ist, wobei die Muffenflansche die axiale Verschiebbarkeit dieses Schalenflanschs und des Kopplungsflanschs zueinander begrenzen und die Gelenkmuffe den Adapter mit dieser Stützschale verbindet. Beispielsweise kann der Kopplungsflansch denselben Durchmesser und dieselbe axiale Länge wie der Schalenflansch aufweisen, mit dem er zusammen axial innerhalb der Muffenlänge anordenbar ist. In jedem Fall sind Kopplungsflansch, Stützschale und Gelenkmuffe so zueinander korrespondierend ausgebildet, dass eine Verbindung des Adapters mit einer Stützschale über die Gelenkmuffe unter Fixierung von Kopplungsflansch und Schalenflansch zueinander ermöglicht ist, die auf dem oben erläuterten Prinzip mit den oben erläuterten Ausführungen und Vorteilen der Verbindung zweier Stützschalen über die Gelenkmuffe beruht. In einer Ausführungsform weist der Adapter zwei Adapterhalbschalen auf, die jeweils zwei axial verlaufende Adapterstege aufweisen, über die die beiden Adapterhalbschalen radial aneinander anliegend miteinander verbunden sind. Ferner können Adapterstützbleche vorgesehen sein, über die die Adapterstege an der Adapterhalbschale abgestützt sind. Wie zu den Stützschalen und der Gelenkmuffe oben erläutert weist das Vorsehen von Adapterhalbschalen mit entsprechenden Ausführungen besondere Vorteile in Bezug auf die Haltbarkeit und Montagefreundlichkeit der erfindungsgemäßen Schutzanordnung auf. In einer Ausführungsform umfasst die erfindungsgemäße Schutzanordnung die Seekabelmuffe, zwei Adapter, sowie zumindest zwei Gelenkmuffen, wobei über einen jeden der beiden Adapter eine der Stützschalen mit der Seekabelmuffe verbunden ist, wobei ein erster der Adapter mit seinem Adapterflansch an einem ersten Ende der Seekabelmuffe und ein zweiter der Adapter mit seinem Adapterflansch an einem zweiten Ende der Seekabelmuffe angeordnet ist. Die Seekabelmuffe ist mit ihrer axialen Erstreckung durch die beiden Enden begrenzt. Der Kopplungsflansch des ersten Adapters ist benachbart zu dem Schalenflansch einer ersten der Stützschalen innerhalb der Muffenlänge einer ersten Gelenkmuffe angeordnet, wobei der Kopplungsflansch des zweiten Adapters benachbart zu dem Schalenflansch einer zweiten der Stützschalen innerhalb der Muffenlänge einer zweiten Gelenkmuffe angeordnet ist. Bei dieser Ausführungsform ist gewährleistet, dass bei dem Verbinden zweier Kabelabschnitte über eine Seekabelmuffe beide Kabelabschnitte ausgehend von der Seekabelmuffe durch die Schutzanordnung geschützt sind, so dass bei beiden Kabelabschnitten ein übermäßiges Biegen des Seekabels verhindert ist, beispielsweise über die Seekabelmuffe über einen Hebearm von einem Schiff aus auf einen Meeresboden abgelegt wird. Durch die korrespondierende Ausgestaltung von Adapter, Stützschale und Gelenkmuffe sowie möglicherweise weiterer Stützschalen und weiterer Gelenkmuffen ist ein übermäßiges Biegen des Seekabels innerhalb der durch die Schutzanordnung geschützten Kabelabschnitte effektiv verhindert.

Vorzugsweise umfasst die Schutzanordnung mehrere Montageketten, die jeweils an einer der Stützschalen oder einer der Gelenkmuffen angeordnet sind, wobei sich insbesondere zumindest einige der Montageketten in ihren Kettenlängen voneinander unterscheiden. Beispielsweise können die Montageketten auch nur an Gelenkmuffen oder auch nur an Stützschalen angeordnet sein. Das Anordnen von Montageketten an Stützschalen kann besonders vorteilhaft sein, da die Stützstege, insbesondere ein als Aufhängungssteg ausgebildeter Stützsteg, besonders gut zur Montage einer Montagekette zugänglich sein können. Insbesondere können erfindungsgemäß allgemein die Stützschalen eine axiale Länge aufweisen, die mindestens das Dreifache einer axialen Länge einer Gelenkmuffe beträgt. Das Anbringen von Montageketten kann insbesondere an langen Stützschalen besonders einfach und robust erfolgen. Das Vorsehen von Montageketten mit unterschiedlichen Kettenlängen kann besonders vorteilhaft sein, da dadurch eine gekrümmte Anordnung der Schutzanordnung realisiert sein kann, bei der zumindest einige der Stützschalen mit ihren jeweiligen Achsen zueinander abgewinkelt sind, wenn die Montageketten an einem Hebearm zum Heben der Schutzanordnung fixiert werden. Durch die gekrümmte Anordnung der Schutzanordnung kann wiederum ein gekrümmter Verlauf eines in der Schutzanordnung geführten Kabelabschnitts eines Seekabels vorgegeben werden, was für das Verlegen des Seekabels, insbesondere bei dem Ablegen eines Seekabels von einem Schiff aus auf dem Meeresboden, vorteilhaft sein kann.

In einer Ausführungsform weist das Schutzsystem eine Traverse auf, wobei die Seekabelmuffe über Halteketten und zumindest einige der Stützschalen und/oder Gelenkmuffen über die Montageketten an der Traverse befestigt sind. Mit zunehmendem Abstand der an der Traverse befestigten Stützschalen und/oder Gelenkmuffen von der Seekabelmuffe nimmt die Kettenlänge der Montageketten, mit der diese Stützschalen und/oder Gelenkmuffen an der Traverse befestigt sind, zu. Als Traverse kann beispielsweise ein Balken, beispielsweise ein Metallträger vorgesehen sein. Über die Kettenlänge kann der Abstand zwischen einer an der Traverse befestigten Stützschale bzw. Gelenkmuffe dergestalt vorgegeben sein, dass die Differenz zwischen dem Abstand, in dem eine erste Stützschale bzw. Gelenkmuffe an der Traverse befestigt ist und dem Abstand, in dem eine zweite Stützschal bzw. Gelenkmuffe an der Traverse befestigt ist, dem Unterschied der Kettenlängen entspricht, mit dem diese Stützschalen bzw. Gelenkmuffen an der Traverse befestigt sind. Eine Stützschale bzw. Gelenkmuffe, die näher an der Seekabelmuffe angeordnet ist als eine andere Stützschale bzw. Gelenkmuffe ist mit einer kürzeren Montagekette an der Traverse befestigt als die andere Stützschale bzw. Gelenkmuffe. Über die Schutzanordnung dieser Ausführungsform kann ein besonders gezieltes und sicheres Anheben und Absenken der Schutzanordnung mit einem darin angeordneten Kabelabschnitt erfolgen, wobei über die Traverse und die unterschiedlichen Kettenlängen die Krümmung der Schutzanordnung um eine Achse senkrecht zur axialen Erstreckung der Stützschalen besonders gezielt vorgegeben sein kann.

Vorzugsweise sind die Kettenlängen so angepasst, dass bei einem Anheben der Traverse in der Vertikalen dergestalt, dass die Stützschalen und/oder Gelenkmuffen über die Montageketten an der Traverse hängend befestigt sind, die Schalenflansche zweier benachbarter, über eine der Gelenkmuffen verbundenen Stützschalen an ihren ersten, von der Traverse am weitesten beabstandeten vertikalen Enden aneinander anliegen und an ihren zweiten, der Traverse am nächsten angeordneten vertikalen Enden jeweils an einem der beiden Muffenflansche der Gelenkmuffe anliegen. Bei dieser Ausführungsform sind die Kettenlängen genau so abgestimmt, dass sie die Stützschalen und Gelenkmuffen in einer solchen Position zueinander halten, dass benachbarte Stützschalen mit ihren Achsen größtmöglich zueinander abgewinkelt sind. Indem die Montageketten an den Stützschalen bzw. Gelenkmuffen die Stützschalen bzw. Gelenkmuffen halten und darüber hinaus die Schalenflansche aneinander und an den Muffenflanschen anliegen, ist eine besonders stabile Anordnung der Schutzanordnung gewährleistet, wenn die Schutzanordnung über die Montageketten an der Traverse frei hängt. Dies ist für das Ablegen eines Kabelabschnitts eines Seekabels, der in der Schutzanordnung angeordnet ist, besonders vorteilhaft.

Vorzugsweise ist zumindest eine der Gelenkmuffen oder der Stützschalen über eine der Montageketten und eine Anpasslasche mit einer Laschenlänge an der Traverse befestigt, wobei der Abstand dieser Gelenkmuffe oder Stützschale von der Traverse durch die Laschenlänge und die Kettenlänge definiert ist. Über eine solche Anpasslasche kann vor Ort vor dem endgültigen Befestigen der Gelenkmuffen bzw. Stützschalen an der Traverse eine Feinjustage des Abstands zwischen der Gelenkmuffe bzw. der Stützschale und der Traverse getroffen werden. Insbesondere können an sämtlichen Gelenkmuffen bzw. Stützschalen, die an der Traverse befestigt sind, Anpasslaschen vorgesehen sein, über die die Gelenkmuffen bzw. Stützschalen zusammen mit der Montagekette an der Traverse befestigt sind. In einer Ausführungsform ist die Anpasslasche als separates Bauteil ausgebildet, das sich über seine Laschenlänge zwischen zwei Enden erstreckt und über die beiden Enden zwischen der Traverse und der Stützschale oder Gelenkmuffe einfügbar ist. Hierzu kann die Anpasslasche beispielsweise zwei Löcher aufweisen, die in der Laschenlänge voneinander beabstandet sind. In einer Ausführungsform ist die Anpasslasche in der Traverse integriert, beispielsweise an die Traverse angeschweißt. Die Integration der Anpasslasche in die Traverse kann eine besonders einfache Fixierung von Gelenkmuffen bzw. Stützschalen an der Traverse in dem gewünschten Abstand ermöglichen und insbesondere eine besonders einfache und sichere Verwendung der erfindungsgemäßen Schutzanordnung für die Verlegung von Seekabeln ermöglichen.

Die Erfindung betrifft ferner eine Stützschale für eine erfindungsgemäße Schutzanordnung sowie eine Gelenkmuffe für eine erfindungsgemäße Schutzanordnung, wobei die erfindungsgemäße Stützschale und die erfindungsgemäße Gelenkmuffe miteinander korrespondierend ausgebildet sind, so dass sie miteinander in Beziehung stehen. Die erfindungsgemäße Stützschale weist einen hohlzylinderartigen Schalenabschnitt auf, der sich axial über eine Schalenlänge zwischen zwei Schalenflanschen erstreckt, wobei sich jeder der Schalenflansche über eine Schalenflanschlänge erstreckt. Die Stützschale ist dergestalt korrespondierend zu der Gelenkmuffe ausgebildet, dass der Schalenflansch zwischen den Muffenflanschen der Gelenkmuffe axial innerhalb der Muffenlänge anordenbar und zwischen den Muffenflanschen axial verschiebbar ist, wobei die Muffenflansche die axiale Verschiebbarkeit des Schalenflansches begrenzen, wobei die Muffenlänge um eine Spiellänge länger ist als die gemeinsame axiale Schalenflanschlänge der beiden axial benachbarten Stützschalen, wobei die Spiellänge durch die Muffenlänge und die Schalenflanschlängen der beiden axial innerhalb der Muffenlänge der Gelenkmuffe angeordneten Schalenflansche festgelegt ist und als der axiale Abstand zwischen den beiden benachbarten Schalenflanschen definiert ist, um den sie an ihren ersten radialen Enden maximal voneinander beabstandet sein können, wenn ihre den ersten radialen Enden radial gegenüberliegenden zweiten radialen Enden aneinander anliegen, während sie über die Gelenkmuffe zueinander fixiert sind, wobei die Spiellänge zwischen einem Zehntel und einem Drittel des Schalenflanschdurchmessers beträgt, wobei über die Spiellänge eine Verschiebbarkeit der Schalenflansche damit ein Winkel festgelegt ist, bis zu dem die beiden über die Gelenkmuffe miteinander verbundenen benachbarten Stützschalen mit ihren Achsen zueinander um eine radiale Richtung abwinkelbar sind, wodurch eine Verbiegung des in den Stützschalen verlaufenden Kabelabschnitts auf einen entsprechenden Biegewinkel beschränkt ist. Insbesondere kann die Stützschale dergestalt korrespondierend zu der Gelenkmuffe ausgebildet sein, dass zwei erfindungsgemäße Stützschalen mit ihren Schalenflanschen benachbart zueinander angeordnet werden können, wobei die benachbarten Schalenflansche axial zueinander verschiebbar axial innerhalb der Muffenlänge anordenbar sind. Die erfindungsgemäße Gelenkmuffe weist einen hohlzylinderartigen Muffenabschnitt auf, der sich axial über eine Muffenlänge zwischen zwei Muffenflanschen erstreckt, wobei die Gelenkmuffe dergestalt korrespondierend zu der Stützschale ausgebildet ist, dass der Schalenflansch zwischen den Muffenflanschen innerhalb der Muffenlänge anordenbar und zwischen den Muffenflanschen axial verschiebbar ist, wobei die Muffenflansche die axiale Verschiebbarkeit des Schalenflanschs begrenzen, wobei die Muffenlänge um eine Spiellänge länger ist als die gemeinsame axiale Schalenflanschlänge der beiden axial benachbarten Stützschalen, wobei die Spiellänge durch die Muffenlänge und die Schalenflanschlängen der beiden axial innerhalb der Muffenlänge der Gelenkmuffe angeordneten Schalenflansche festgelegt ist und als der axiale Abstand zwischen den beiden benachbarten Schalenflanschen definiert ist, um den sie an ihren ersten radialen Enden maximal voneinander beabstandet sein können, wenn ihre den ersten radialen Enden radial gegenüberliegenden zweiten radialen Enden aneinander anliegen, während sie über die Gelenkmuffe zueinander fixiert sind, wobei die Spiellänge zwischen einem Zehntel und einem Drittel des Schalenflanschdurchmessers beträgt, wobei über die Spiellänge eine Verschiebbarkeit der Schalenflansche damit ein Winkel festgelegt ist, bis zu dem die beiden über die Gelenkmuffe miteinander verbundenen benachbarten Stützschalen mit ihren Achsen zueinander um eine radiale Richtung abwinkelbar sind, wodurch eine Verbiegung des in den Stützschalen verlaufenden Kabelabschnitts auf einen entsprechenden Biegewinkel beschränkt ist. Über die Kombination einer erfindungsgemäßen Stützschale mit einer erfindungsgemäßen Gelenkmuffe ist eine erfindungsgemäße Schutzanordnung realisierbar, die die oben erläuterten Ausgestaltungen und Vorteile aufweisen kann.

Die Erfindung betrifft ferner ein Verfahren zur Montage einer Schutzanordnung an einem Seekabelabschnitt, die zum Gewährleisten eines Tragens des Seekabelabschnitts bei dem Verlegen des Seekabels (100) geeignet ist, indem die Schutzanordnung an einem Hebearm aufgehängt wird, wobei eine erste Stützschale und eine zweite Stützschale jeweils an dem Seekabelabschnitt angeordnet werden. Dabei verläuft der Seekabelabschnitt radial innerhalb der Schalenabschnitte der beiden Stützschalen. Die beiden Stützschalen werden axial zueinander benachbart angeordnet, wobei ein Schalenflansch der ersten Stützschale zu einem Schalenflansch der zweiten Stützschale benachbart angeordnet wird. Ferner wird eine Gelenkmuffe dergestalt an den Schalenflanschen der beiden axial benachbarten Stützschalen angeordnet, dass sie die beiden Stützschalen unter Fixierung ihrer benachbarten Schalenflansche zueinander miteinander verbindet. Beispielsweise kann erst die Gelenkmuffe an dem Kabelabschnitt angeordnet werden und sodann radial von außen die Stützschalen an der Gelenkmuffe. Beispielsweise können zuerst die Stützschalen radial von außen an dem Kabelabschnitt angeordnet werden und sodann die Gelenkmuffe radial von außen an den Stützschalen. Beispielsweise können die Stützschalen in die Gelenkmuffe oder die Gelenkmuffe in die Stützschalen geschoben werden, nachdem sie an dem Kabelabschnitt angeordnet worden sind. Die Schalenflansche der beiden Stützschalen werden innerhalb einer Muffenlänge der Gelenkmuffe zwischen zwei Muffenflanschen, die an den beiden axialen Enden des Muffenabschnitts angeordnet sind, axial verschiebbar angeordnet, wobei die Muffenflansche die axiale Verschiebbarkeit der Schalenflansche begrenzen, wobei die Muffenlänge um eine Spiellänge länger ist als die gemeinsame axiale Schalenflanschlänge der beiden axial benachbarten Stützschalen, wobei die Spiellänge durch die Muffenlänge und die Schalenflanschlängen der beiden axial innerhalb der Muffenlänge der Gelenkmuffe angeordneten Schalenflansche festgelegt ist und als der axiale Abstand zwischen den beiden benachbarten Schalenflanschen definiert ist, um den sie an ihren ersten radialen Enden maximal voneinander beabstandet sein können, wenn ihre ersten radialen Enden radial gegenüberliegenden zweiten radialen Enden aneinander anliegen, während sie über die Gelenkmuffe zueinander fixiert sind, wobei die Spiellänge zwischen einem Zehntel und einem Drittel des Schalenflanschdurchmessers beträgt, wobei über die Spiellänge eine Verschiebbarkeit der Schalenflansche und damit ein Winkel festgelegt ist, bis zu dem die beiden über die Gelenkmuffe miteinander verbundenen benachbarten Stützschalen mit ihren Achsen zueinander um eine radiale Richtung abwinkelbar sind, wodurch eine Verbiegung des in den Stützschalen verlaufenden Kabelabschnitts auf einen entsprechenden Biegewinkel beschränkt ist. Über das erfindungsgemäße Verfahren kann auf einfache Weise eine Schutzanordnung an einem Kabelabschnitt angeordnet werden, die einen zuverlässigen Schutz des Kabelabschnitts bei einem Verlegen eines Seekabels mit dem Kabelabschnitt gewährleistet.

Vorzugsweise werden die Stützschalen an dem Seekabelabschnitt angeordnet, indem zwei Stützhalbschalen, die jeweils zwei axial verlaufende Stützstege aufweisen, radial aneinander anliegend an dem Seekabelabschnitt angeordnet werden und über ihre Stützstege miteinander verbunden werden. Vorzugsweise wird die Gelenkmuffe an dem Seekabelabschnitt oder an den Schalenflanschen angeordnet, indem zwei Muffenhalbschalen, die jeweils zwei axial verlaufende Muffenstege aufweisen, radial aneinander anliegend an dem Seekabelabschnitt oder an den Schalenflanschen angeordnet werden und über ihre Muffenstege miteinander verbunden werden. Vorzugsweise werden in einem ersten Arbeitsschritt die Stützschalen an dem Seekabelabschnitt angeordnet und in einem zweiten Arbeitsschritt die Gelenkmuffe radial von außen über den Schalenflanschen angeordnet.

In einer Ausführungsform des erfindungsgemäßen Verfahrens wird ein Adapter mit seinem Adapterflansch an einem Ende einer Seekabelmuffe montiert, in der zwei Seekabelabschnitte miteinander verbunden sind. An einem Kopplungsflansch des Adapters wird eine der Stützschalen mit einer ihrer Schalenflansche angeordnet, wobei eine Gelenkmuffe dergestalt an dem Schalenflansch und dem Kopplungsflansch angeordnet wird, dass sie den Adapter mit der Stützschale unter Fixierung des Schalenflansches mit dem Kopplungsflansch zueinander miteinander verbindet. Die Flansche, nämlich der Kopplungsflansch und der Schalenflansch, werden innerhalb der Muffenlänge der Gelenkmuffe zwischen zwei Muffenflanschen, die an den beiden axialen Enden des Muffenabschnitts angeordnet sind, axial zueinander verschiebbar angeordnet, wobei die Muffenflansche der Gelenkmuffe die axiale Verschiebbarkeit der Flansche begrenzen. Über den Adapter ist somit eine Stützschale gelenkig mit der Seekabelmuffe verbunden, wobei der Winkel, in dem die Achse der Stützschale zu der Achse des Adapters abgewinkelt werden kann, durch die Gelenkmuffe in Kombination mit dem Kopplungsflansch und dem Muffenflansch begrenzt ist. Vorzugsweise wird an beiden axialen Enden der Seekabelmuffe jeweils ein Adapter montiert, wobei jeder der Adapter über eine Gelenkmuffe mit jeweils einer Stützschale unmittelbar verbunden wird. An jeder der mit einem der Adapter unmittelbar verbundenen Stützschalen werden weitere Stützschalen angeordnet, wobei jeweils zwei benachbarte Stützschalen mit jeweils einer Gelenkmuffe miteinander verbunden werden. Damit lässt sich über einen von der Seekabelmuffe aus beginnenden Längenbereich eines Kabelabschnitts ein maximaler Biegewinkel des Kabelabschnitts vorgeben. Hierzu trägt die Mehrzahl der Stützschalen bei, die jeweils mit ihren Schalenflanschen aneinander anliegend benachbart sind und über jeweils eine Gelenkmuffe miteinander verbunden sind. In einer Ausführungsform des erfindungsgemäßen Verfahrens werden einige der Stützschalen und/oder einige der Gelenkmuffen über jeweils eine Montagekette mit einer Traverse verbunden, wobei mit zunehmendem Abstand einer der über eine der Montageketten an der Traverse zu befestigenden Stützschalen oder Gelenkmuffen von der Seekabelmuffe eine zunehmende Kettenlänge der Montagekette vorgesehen wird. Wie oben erläutert kann hierdurch eine besonders stabile Anordnung der Schutzanordnung gewährleistet sein, die für das Ablegen der Schutzanordnung mit einem darin angeordneten Kabelabschnitt vorteilhaft sein kann.

Die Erfindung betrifft ferner die Verwendung einer Schutzanordnung zur Montage an einem Seekabelabschnitt, wobei eine erste Stützschale und eine zweite Stützschale jeweils an dem Seekabelabschnitt angeordnet werden, wobei der Seekabelabschnitt radial innerhalb der Schalenabschnitte der beiden Stützschalen verläuft, wobei die Stützschalen axial zueinander benachbart angeordnet werden, wobei ein Schalenflansch der ersten Stützschale zu einem Schalenflansch der zweiten Stützschale benachbart angeordnet wird, wobei eine Gelenkmuffe dergestalt an den Schalenflanschen der beiden axial benachbarten Stützschalen angeordnet wird, dass sie die beiden Stützschalen unter Fixierung ihrer benachbarten Schalenflansche zueinander miteinander verbindet, wobei die Schalenflansche der beiden Stützschalen innerhalb einer Muffenlänge der Gelenkmuffe zwischen zwei Muffenflanschen, die an den beiden axialen Enden des Muffenabschnitts angeordnet sind, axial verschiebbar angeordnet werden, wobei die Muffenflansche die axiale Verschiebbarkeit der Schalenflansche begrenzen.

Die erfindungsgemäße Verwendung kann ferner umfassen, dass die Stützschalen an dem Seekabelabschnitt angeordnet werden, indem zwei Stützhalbschalen, die jeweils zwei axial verlaufende Stützstege aufweisen, radial aneinander anliegend an dem Seekabelabschnitt angeordnet werden und über ihre Stützstege miteinander verbunden werden und/oder dass die Gelenkmuffe an dem Seekabelabschnitt angeordnet wird, indem zwei Muffenhalbschalen, die jeweils zwei axial verlaufende Muffenstege aufweisen, radial aneinander anliegend an dem Seekabelabschnitt angeordnet werden und über ihre Muffenstege miteinander verbunden werden.

Die erfindungsgemäße Verwendung kann ferner umfassen, dass in einem ersten Arbeitsschritt die Stützschalen an dem Seekabelabschnitt angeordnet werden und in einem zweiten Arbeitsschritt die Gelenkmuffe von außen über den Schalenflanschen angeordnet wird.

Die erfindungsgemäße Verwendung kann ferner umfassen, dass ein Adapter mit seinem Adapterflansch an einem Ende einer Seekabelmuffe montiert wird, in der zwei Seekabelabschnitte miteinander verbunden sind, wobei an einem Kopplungsflansch des Adapters eine der Stützschalen mit einem ihrer Schalenflansche angeordnet wird, wobei eine Gelenkmuffe dergestalt an dem Schalenflansch und dem Kopplungsflansch angeordnet wird, dass sie den Adapter mit der Stützschale unter Fixierung ihrer benachbarten Flansche zueinander miteinander verbindet, wobei die Flansche innerhalb der Muffenlänge der Gelenkmuffe axial zueinander verschiebbar angeordnet werden, wobei die Muffenflansche der Gelenkmuffe die axiale Verschiebbarkeit der Flansche begrenzen.

Die erfindungsgemäße Verwendung kann ferner umfassen, dass an beiden axialen Enden der Seekabelmuffe jeweils ein Adapter montiert wird, wobei jeder der Adapter über eine Gelenkmuffe mit jeweils einer Stützschale unmittelbar verbunden wird, wobei an jeder der mit einem der Adapter unmittelbar verbundenen Stützschalen weitere Stützschalen angeordnet werden, wobei jeweils zwei benachbarte Stützschalen mit jeweils einer Gelenkmuffe miteinander verbunden werden.

Die erfindungsgemäße Verwendung kann ferner umfassen, dass einige der Stützschalen und/oder einige der Gelenkmuffen über jeweils eine Montagekette mit einer Traverse verbunden werden, wobei mit zunehmendem Abstand einer der über eine der Montageketten an der Traverse zu befestigenden Stützschalen oder Gelenkmuffen von der Seekabelmuffe eine zunehmende Kettenlänge der Montagekette vorgesehen wird.

Die Erfindung wird im Folgend anhand von Figuren unter Bezugnahme auf ein Ausführungsbeispiel der erfindungsgemäßen Schutzanordnung näher erläutert.

Es zeigen:

Figur 1: eine schematische Darstellung einer erfindungsgemäßen Ausführungsform;

Figur 2: eine schematische Schnittdarstellung eines Ausschnitts der Ausführungsform gemäß Figur 1;

Figur 3a: eine schematische Darstellung einer Stützhalbschale der erfindungsgemäßen Ausführungsform gemäß Figur 1;

Figur 3b: eine schematische Schnittdarstellung der Stützschale gemäß Figur 3a;

Figur 4a: eine schematische Darstellung einer Stützhalbschale der Ausführungsform gemäß Figur 1;

Figur 4b: eine schematische Schnittdarstellung der Stützhalbschale gemäß Figur 4a;

Figur 5a: eine schematische Darstellung einer ersten Ansicht der Gelenkmuffe der Ausführungsform gemäß Figur 1;

Figur 5b: eine schematische Darstellung einer zweiten Ansicht der Gelenkmuffe gemäß Figur 5a;

Figur 6a: eine schematische Darstellung eines Adapters der Ausführungsform gemäß Figur 1;

Figur 6b: eine schematische Schnittdarstellung des Adapters gemäß Figur 6a;

Figur 7a: eine schematische Darstellung einer Anpasslasche der Ausführungsform gemäß Figur 1;

Figur 7b: eine schematische Schnittdarstellung der Anpasslasche gemäß Figur 7a.

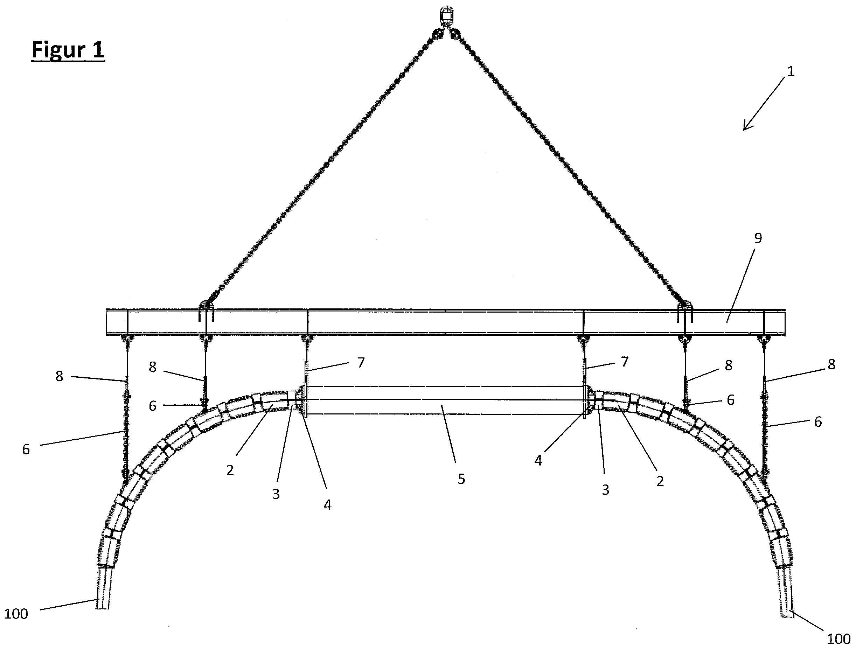

In Figur 1 ist eine erfindungsgemäße Schutzanordnung 1 schematisch dargestellt. Die Schutzanordnung 1 umfasst eine Seekabelmuffe 5, an deren beiden axialen Enden jeweils ein Adapter 4 angeordnet ist. Ein jeder der Adapter 4 ist über eine Gelenkmuffe 3 mit einer Stützschale 2 verbunden, wobei auf die mit dem Adapter 4 verbundene Stützschale 2 folgend weitere Stützschalen 2 vorgesehen sind, wobei jeweils zwei benachbarte Stützschalen 2 über eine Gelenkmuffe 3 miteinander verbunden sind. Radial innerhalb der Stützschalen 2 und der Gelenkmuffen 3 der Schutzanordnung 1 ist ein Kabelabschnitt eines Seekabels 100 angeordnet. Die Schutzanordnung 1 ist zur Seekabelmuffe 5 symmetrisch ausgebildet, so dass die jeweiligen Kabelabschnitte des Seekabels 100, die an den jeweiligen Enden der Seekabelmuffe 5 angeordnet sind, gleichermaßen durch die Schutzanordnung 1 geschützt sind. Dabei ist die Seekabelmuffe 5 über Halteketten 7 sowie einige der Stützschalen 2 über Montageketten 6 und Anpasslaschen 8 an einer Traverse 9 befestigt. Die Traverse 9 ist über Hebeketten mit einem Hebearm verbunden, so dass über die Traverse 9 Kabelabschnitte eines Seekabels 100, die über die Seekabelmuffe 5 miteinander verbunden sind, von einem Schiff aus über einen Hebearm auf einem Meeresboden abgesetzt werden können. Dabei ist die Schutzanordnung 1 erfindungsgemäß dafür vorgesehen, dass die Kabelabschnitte, die aus der Seekabelmuffe 5 zwangsläufig horizontal austreten, über einen gezielten Biegewinkel zur Vertikalen hin gebeugt werden, bis sie mit einem Eintauchwinkeln von maximal 5°, der über den Winkel der Achse der von der Seekabelmuffe 5 am weitesten entfernten Stützschale 2 zu der Achse der Seekabelmuffe 5 festgelegt ist, in das Wasser eintauchen. Durch die erfindungsgemäße Schutzanordnung 1 kann somit einer übermäßigen Belastung der Kabelabschnitte des Seekabels 100, die über die Seekabelmuffe 5 verbunden sind, vorgebeugt werden, wenn die miteinander verbundenen Kabelabschnitte von dem Schiff auf dem Meeresboden abgelegt werden und hierbei in das Wasser eintauchen.

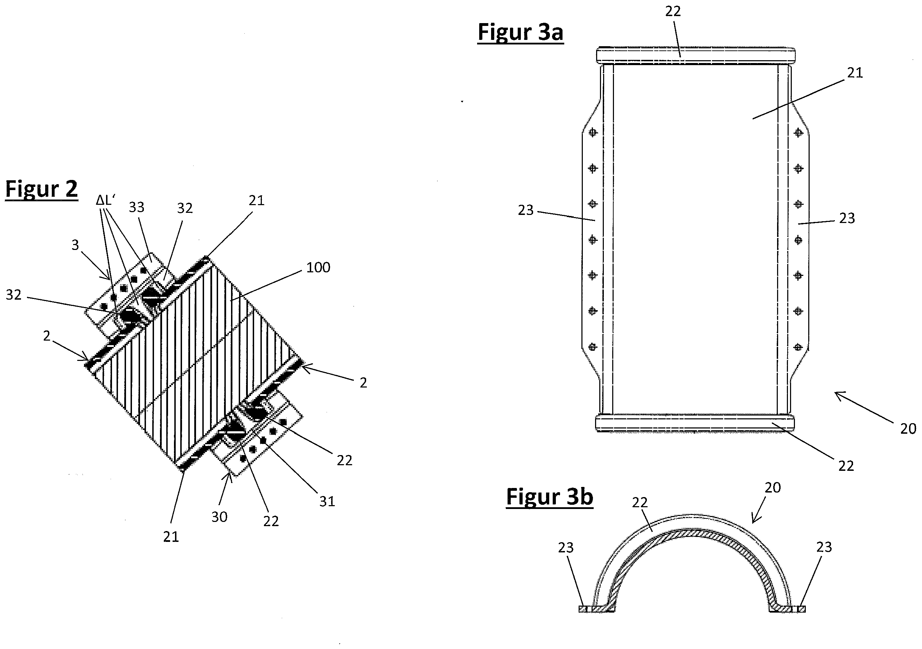

In Figur 2 ist ein Ausschnitt der Schutzanordnung 1 gemäß Figur 1 in einer schematischen Schnittdarstellung dargestellt. Figur 2 zeigt dabei das Zusammenwirken von zwei benachbart angeordneten Stützschalen 2 mit einer zu den Stützschalen 2 korrespondierend ausgebildeten Gelenkmuffe 3. Radial innerhalb der Schalenabschnitte 21 der beiden Stützschalen 2 ist ein Abschnitt eines Seekabels 100 angeordnet. Die beiden Stützschalen 2 weisen jeweils an einem axialen Ende ihres Schalenabschnitts 21 einen Schalenflansch 22 auf. Dabei sind die beiden Stützschalen 2 axial benachbart zueinander angeordnet. Dabei sind die dargestellten Schalenflansche 22 der beiden Stützschalen 2 benachbart und aneinander angeordnet. Die Gelenkmuffe 3 ist radial außerhalb um die Stützschalen 2 angeordnet. Die Gelenkmuffe 3 weist einen Muffenabschnitt 31 auf, der sich zwischen zwei Muffenflanschen 32 axial erstreckt, die den Muffenabschnitt 31 axial begrenzen. Dabei weist der Muffenabschnitt 31 zwischen den Muffenflanschen 32 eine Muffenlänge auf, über die er sich axial erstreckt. Die benachbarten Schalenflansche 22 der benachbart zueinander angeordneten Stützschalen 2 sind in der erfindungsgemäßen Schutzanordnung 1 axial innerhalb der Muffenlänge des Muffenabschnitts 31 der Gelenkmuffe 3 angeordnet. Dabei sind die Schalenflansche 22 innerhalb der Muffenlänge verschiebbar, da zwischen den Muffenflanschen 32 und den Schalenflanschen 22 sowie zwischen den Schalenflanschen 22 selbst Verschiebestrecken $\Delta L'$ vorgesehen sind. Die Summe der Verschiebestrecken $\Delta L'$ ergibt eine Spiellänge $\Delta L$, um die die Muffenlänge länger ist als die gemeinsame axiale Schalenflanschlänge der benachbarten Schalenflansche 22 der beiden axial benachbarten Stützschalen 2, wobei die Schalenflanschlänge die Erstreckung eines Schalenflansches 22 in Richtung der Achse des Schalenabschnitts 21 darstellt. Aus Figur 2 ist ersichtlich, dass über die Verschiebestrecken $\Delta L'$ und somit über die Spiellänge $\Delta L$ eine Verschiebbarkeit der Schalenflansche 22 innerhalb der Muffenlänge des Muffenabschnitts 31 ermöglicht ist, wodurch ermöglicht ist, dass sich die beiden benachbarten Stützschalen 2 mit ihren Achsen zueinander abwinkeln. Allerdings ist der Winkel, um den sich die Stützschalen 2 zueinander abwinkeln können, durch die Spiellänge $\Delta L$ begrenzt, so dass der Biegewinkel des Kabelabschnitts des Seekabels 100, das radial innerhalb der Stützschalen 2 angeordnet ist, begrenzt ist. Ferner ist aus Figur 2 erkennbar, dass die über die Gelenkmuffe 3 zueinander fixierten Schalenflansche 22 einen identischen Querschnitt in axialer Richtung aufweisen, was erfindungsgemäß allgemein vorteilhaft sein kann. Ferner ist aus Figur 2 erkennbar, dass die Gelenkmuffe 3 Muffenstege 33 aufweist, die an einer Muffenhalbschale 30 angeordnet sind. In Figur 2 ist nur eine Muffenhalbschale 30 der Gelenkmuffe 3 dargestellt. Über die Muffenstege 33 lassen sich zwei Muffenhalbschalen 30 auf einfache und robuste Art und Weise miteinander verbinden.

In den Figuren 3a und 3b ist eine Stützhalbschale 20 einer Stützschale 2 gemäß dem Ausführungsbeispiel einer Schutzanordnung 1 nach Figur 1 dargestellt. Die Stützhalbschale 20 weist einen Abschnitt des Schalenabschnitts 21 der Stützschale 2 auf. Der Schalenabschnitt 21 erstreckt sich axial zwischen zwei Schalenflanschen 22. Die Stützhalbschale 20 weist einen Abschnitt des Schalenflanschs 22 auf, der als Schalenhalbflansch ausgebildet ist. Die Stützhalbschale 20 weist zwei Stützstege 23 auf, die identisch ausgebildet sind. Die Stützstege 23 weisen Bohrungen auf, über die sie mit den Stützstegen 23 der korrespondierenden Stützhalbschale 20 der Stützschale 2 erfindungsgemäß verbunden sind. Erfindungsgemäß sind hierzu Schrauben vorgesehen, die durch die zueinander fluchtend angeordneten Bohrungen der Stützstege 23 der beiden Stützhalbschalen 20 hindurchgeführt sind. Der Abschnitt des Schalenabschnitts 21 sowie die Stützstege 23 sind integral aus einem gebogenen Blech gefertigt. Der Abschnitt des Schalenflansches 22 ist auf dieses gebogene Blech aufgeschweißt und erstreckt sich von der Mantelfläche des Schalenabschnitts 21 der Stützschale 2 aus radial nach außen.

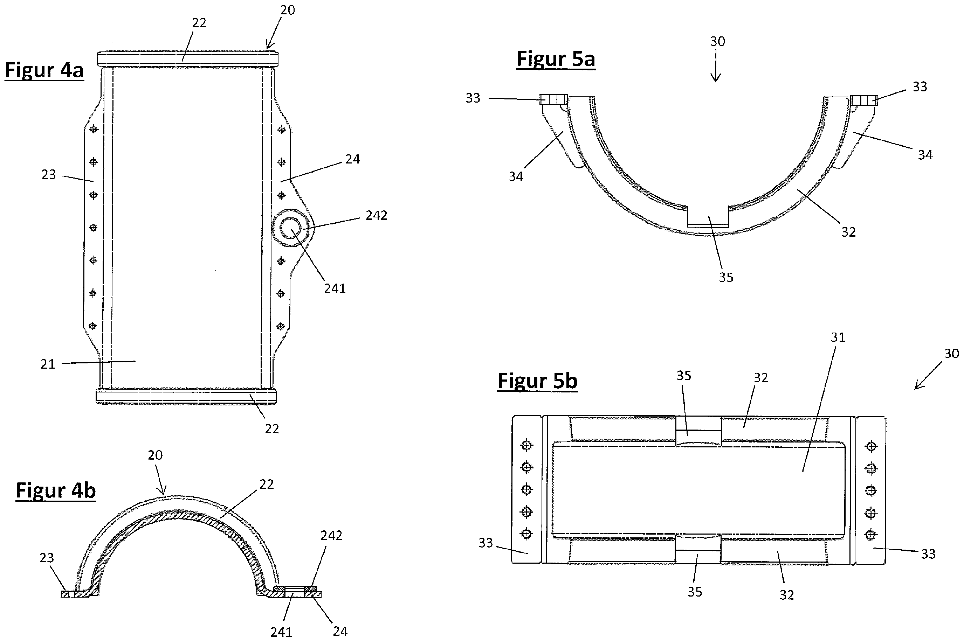

In den Figuren 4a und 4b ist eine Stützhalbschale 20 einer weiteren Stützschale 2 der erfindungsgemäßen Schutzanordnung 1 gemäß Figur 1 dargestellt. Die Stützhalbschale 20 gemäß den Figuren 4a und 4b unterscheidet sich von der Stützhalbschale 20 gemäß den Figuren 3a und 3b dadurch, dass einer ihrer Stützstege 23 als Aufhängungssteg 24 ausgebildet ist. Der Aufhängungssteg 24 weist eine Ausnehmung 241 auf. Darüber hinaus ist an dem Aufhängungssteg 24 eine Verstärkungsplatte 242 angeordnet, die eine Verstärkungsausnehmung aufweist, die mit der Ausnehmung 241 des Aufhängungsstegs 24 fluchtet. In dem vorliegenden Ausführungsbeispiel ist die Verstärkungsplatte 242 auf den Aufhängungssteg 24 aufgeschweißt. Einige der Stützhalbschalen 20 der Schutzanordnung 1 sind aus zwei Stützhalbschalen 20 gemäß den Figuren 4a und 4b gebildet, wobei die Stützhalbschalen 20 radial aneinander anliegen, wobei die Stützstege 23 der beiden Stützhalbschalen 20 aneinander anliegen und die Aufhängungsstege 24 dieser Stützhalbschalen 20 aneinander anliegen, wobei die Ausnehmungen 241 der beiden aneinander anliegenden Aufhängungsstege 24 zueinander fluchten. Die Stützstege 23 und die Aufhängungsstege 24 der beiden Stützhalbschalen 20 sind miteinander über Schrauben verbunden, die durch die Bohrungen in den jeweiligen Stegen geführt sind. Eine solche Stützschale 2 ist besonders sicher über eine Montagekette 6 an einer Traverse 9 befestigbar, da eine Halterung zwischen der Montagekette 6 und der Stützschale 2 durch die Ausnehmungen 241 der beiden Stützhalbschalen 20 der Stützschale 2 geführt werden kann.

In den Figuren 5a und 5b ist eine Muffenhalbschale 30 einer Gelenkmuffe 3 dargestellt. Die Gelenkmuffe 3 ist aus zwei Muffenhalbschalen 30 gebildet. Eine jede Muffenhalbschale 30 weist Abschnitte der Muffenflansche 32 auf, die als Muffenhalbflansche ausgebildet sind, sowie einen Abschnitt des Muffenabschnitts 31, der als Muffenhalbabschnitt ausgebildet ist. Die Gelenkmuffe weist einen hohlzylinderartigen Muffenabschnitt 31 auf, der sich aus den Abschnitten des Muffenabschnitts 31, der von den beiden Muffenhalbschalen 30 umfasst ist, zusammensetzt. Aus den Figuren 5a und 5b ist erkennbar, dass der Muffenabschnitt 31 einer Gelenkmuffe 3 axial zwischen zwei Muffenflanschen 32 verläuft und in seiner axialen Erstreckung durch die Muffenflansche 32 beschränkt ist. Die Muffenflansche 32 weisen jeweils eine sich axial über eine Muffenflanschlänge erstreckende Aussparung 35 auf, die zur Aufnahme eines axialen Abschnitts der Stützstege 23 der beiden Stützhalbschalen 20 einer Stützschale 2 ausgebildet sind. Die Muffenflansche 32 erstrecken sich von der Mantelfläche des Muffenabschnitts 31 der Gelenkmuffe 3 ausgehend radial zum Innenraum des Muffenabschnitts 31 hin. Die Muffenhalbschale 30 weist ferner zwei Muffenstege 33 auf, die sich jeweils über die gesamte axiale Erstreckung der Muffenschale 30 hinweg erstrecken und radial außerhalb von der Mantelfläche des Muffenabschnitts 31 angeordnet sind. Über die Muffenstege 33 können zwei Muffenhalbschalen 30 miteinander verbunden werden. In der vorliegenden Ausführungsform ist eine Gelenkmuffe 3 durch zwei radial aneinander anliegenden Muffenhalbschalen 30 gebildet. Dabei bezeichnet die radiale Richtung eine Richtung senkrecht zur axialen Erstreckung des Muffenabschnitts 31 und damit der beiden Muffenhalbschalen 30. Bei der Ausbildung der Gelenkmuffe 3 liegen die Muffenstege 33 der beiden Muffenhalbschalen 30 aneinander so an, dass die Bohrungen, die in den Muffenstegen 33 vorgesehen sind, fluchtend einander gegenüberliegen. In der beschriebenen Ausführungsform sind bei einer Gelenkmuffe 3 die Muffenhalbschalen 30 über Schrauben, die durch die Bohrungen in den Muffenstegen 33 verlaufen, miteinander verbunden. Die Muffenhalbschale 30 einer Gelenkmuffe 3 weist ferner Muffenstützbleche 34 auf, über die die Muffenstege 33 an dem Muffenabschnitt 31 abgestützt sind. Vorliegend sind der Abschnitt des Muffenabschnitts 31 sowie die Abschnitte der Muffenflansche 32, die von einer Muffenhalbschale 30 umfasst sind, einstückig ausgebildet und aus einem Blech geformt. Die Muffenstege 33 sowie die Muffenstützbleche 34 sind an dieses Blech angeschweißt. In dem vorliegenden Ausführungsbeispiel weisen ferner beide Muffenhalbschalen 30 jeweils zwei Aussparungen 35 auf, die sich jeweils axial über die gesamte Muffenflanschlänge erstrecken. Die Aussparungen 35 einer ersten Muffenhalbschale 30 liegen den Aussparungen 35 einer zweiten Muffenhalbschale 30 in der Gelenkmuffe 3 gegenüber. Somit sind die Aussparungen 35 zur Aufnahme eines Abschnitts der Stützstege 23 und der Aufhängungsstege 24 der Stützhalbschalen 20 der Stützschalen 2 geeignet, die benachbart zueinander angeordnet und über die Gelenkmuffe 3 miteinander verbunden sind. Dabei ist aus den Figuren 3a, 3b, 4a und 4b klar zu entnehmen, dass die Stützstege 23 und die Aufhängungsstege 24 der Stützhalbschalen 20 zu den Schalenflanschen 22 hin verschmälert auslaufen, so dass die Aussparungen 35 in der Gelenkmuffe 3 diese Abschnitte mit den schmalen Auslaufungen der Stützstege 23 und Aufhängungsstege 24 aufnehmen können.

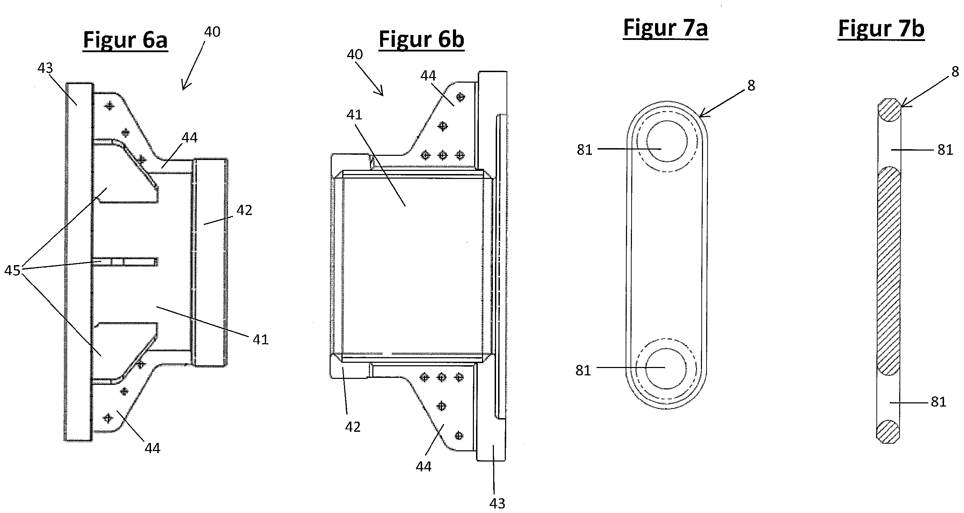

In den Figuren 6a und 6b ist eine Adapterhalbschale 40 eines Adapters 4 gemäß der in Figur 1 dargestellten Ausführungsform einer Schutzanordnung 1 dargestellt. Die Adapterhalbschale 40 weist einen Abschnitt des Adapterabschnitts 41 auf, der als Adapterhalbabschnitt ausgebildet ist, einen Abschnitt des Adapterflanschs 43, der als Adapterhalbflansch ausgebildet ist, sowie einen Abschnitts des Kopplungsflanschs 42, der als Kopplungshalbflansch ausgebildet ist. Aus den Figuren 6a und 6b ist ersichtlich, dass der Adapter 4 einen Adapterabschnitt 41 aufweist, der nach Art eines Hohlzylinders ausgebildet ist. Der Adapterabschnitt 41 verläuft mit seiner axialen Erstreckung von einem Adapterflansch 43 zu einem Kopplungsflansch 42. Der Kopplungsflansch 42 erstreckt sich als radialer Vorsprung von der Mantelfläche des Adapterabschnitts 41 aus radial nach außen. In diesem Sinne ist der Kopplungsflansch 42 an dem Adapterabschnitt 41 analog zu den Schalenflanschen 22 an den Schalenabschnitten 21 der Stützschalen 2 angeordnet, so dass eine Gelenkmuffe 3 analog zur Aufnahme des Kopplungsflanschs 42 zusammen mit einem Schalenflansch 21 ausgebildet ist. Eine Adapterhalbschale 40 ist aus einem gebogenen Blech gefertigt, das den von der Adapterhalbschale 40 umfassten Abschnitt des Adapterabschnitts 41 darstellt, wobei an dieses gebogene Blech Adapterstege 44 und Adapterstützbleche 45 sowie der von der Adapterhalbschale 40 umfasste Abschnitt des Adapterflansches 43 und der von der Adapterhalbschale 40 umfasste Abschnitt des Kopplungsflansches 42 angeschweißt sind. Die Adapterstege 44 sowie die Adapterstützbleche 45 dienen zum Abstützen des Adapterflansches 43 an dem Adapterabschnitt 41. Die Adapterstege 44 verlaufen axial entlang des Adapterabschnitts 41. Zum einen sind über die Adapterstege 44 zwei Adapterhalbschalen 40 unter Ausbildung eines Adapters 4 miteinander verbindbar. Zum anderen verlaufen die Adapterstege 44 zum Kopplungsflansch 42 hin verschmälert aus, wobei die radiale Erstreckung der Adapterstege 44 in dem schmalen Auslauf der Adapterstege 44 nahe des Kopplungsflansches 42 mit den Aussparungen 35 in der Gelenkmuffel 3 so korrespondieren, dass die Aussparungen 35 zur Aufnahme dieser Abschnitte der Adapterstege 44 ausgebildet sind. Somit ist ein Verdrehen eines Adapters 4 in der Schutzanordnung 1 gegenüber der eine Stützschale 2 mit dem Adapter 4 verbindenden Gelenkmuffe 3 in einer Drehrichtung um die Achse des Adapters 4 ausgeschlossen.

In den Figuren 7a und 7b ist eine Anpasslasche 8 dargestellt. Die Anpasslasche 8 ist als ovales Blechstück ausgebildet, in dem zwei Löcher 81 vorgesehen sind. Über die Laschenlänge, die durch die Distanz der Lochmitten der Löcher 81 vorgegeben ist, kann bei dem Einsatz der Anpasslaschen 8 gemäß dem Ausführungsbeispiel nach Figur 1 der Abstand der über die Montageketten 6 an einer Traverse 9 befestigten Stützschalen 2 präzise vor Ort angepasst werden.

Aus den gezeigten Ausführungsbeispielen ist für den Fachmann klar erkennbar, dass die erfindungsgemäße Schutzanordnung 1 einfach und robust aufgebaut ist und über die Ausbildung mit Halbschalen besonders einfach um einen Kabelabschnitt eines Seekabels 100 angeordnet werden kann. Darüber hinaus gewährleistet die Schutzanordnung 1 über die präzise Abstimmung der Kettenlängen der Montageketten 6 und der Halteketten 7 im Zusammenspiel mit dem vordefinierten maximalen Knickwinkel zwischen zwei benachbarten Stützschalen 2 eine vordefinierbare Krümmung der in der Schutzanordnung 1 angeordneten Kabelabschnitte des Seekabels 100, wenn die über die Seekabelmuffel 5 verbundenen Kabelabschnitte mit der Traverse 9 von einem Schiff angehoben und auf einem Meeresboden abgesetzt werden.

**Bezugszeichenliste**

| | |
|---|---|
| 1 | Schutzanordnung |
| 2 | Stützschale |
| 3 | Gelenkmuffe |
| 4 | Adapter |
| 5 | Seekabelmuffe |
| 6 | Montagekette |
| 7 | Haltekette |
| 8 | Anpasslasche |
| 9 | Traverse |
| 20 | Stützhalbschale |
| 21 | Schalenabschnitt |
| 22 | Schalenflansch |
| 23 | Stützsteg |
| 24 | Aufhängungssteg |
| 30 | Muffenhalbschale |
| 31 | Muffenabschnitt |
| 32 | Muffenflansch |
| 33 | Muffensteg |
| 34 | Muffenstützblech |
| 35 | Aussparung |
| 40 | Adapterhalbschale |
| 41 | Adapterabschnitt |
| 42 | Kopplungsflansch |
| 43 | Adapterflansch |
| 44 | Adaptersteg |
| 45 | Adapterstützblech |
| 81 | Loch |
| 100 | Seekabel |
| 241 | Ausnehmung |
| 242 | Verstärkungsplatte |
| $\Delta L'$ | Verschiebestrecke |

**Patentansprüche**

1. Schutzanordnung (1) zum Aufnehmen und Schützen eines Kabelabschnitts eines Seekabels (100) und zum Tragen des Kabelabschnitts bei einer Aufhängung der Schutzanordnung an einem Hebearm bei dem Verlegen des Seekabels (100), die Schutzanordnung (1) umfassend zumindest zwei Stützschalen (2), von denen eine jede einen hohlzylinderartigen Schalenabschnitt (21) aufweist, der sich axial über eine Schalenlänge zwischen zwei Schalenflanschen (22) erstreckt, wobei sich jeder der Schalenflansche (22) axial über eine Schalenflanschlänge erstreckt,

**dadurch gekennzeichnet, dass**

die Schutzanordnung (1) zumindest eine Gelenkmuffe (3) umfasst, die zum Verbinden von zwei axial benachbarten Stützschalen (2) unter Fixierung deren benachbarter Schalenflansche (22) zueinander ausgebildet ist, wobei die Gelenkmuffe (3) einen hohlzylinderartigen Muffenabschnitt (31) aufweist, der sich axial über eine Muffenlänge zwischen zwei Muffenflanschen (32) erstreckt, wobei die Gelenkmuffe (3) und die Stützschalen (2) so miteinander korrespondierend ausgebildet sind, dass zum zueinander Fixieren der Schalenflansche (22) der beiden Stützschalen (2) durch die Gelenkmuffe (3) die Schalenflansche (22) der zwei axial benachbarten Stützschalen (2) axial zueinander verschiebbar innerhalb der Muffenlänge anordenbar sind, wobei die Muffenflansche (32) die axiale Verschiebbarkeit der Schalenflansche (22) zueinander begrenzen, wobei die Muffenlänge um eine Spiellänge länger ist als die gemeinsame axiale Schalenflanschlänge der beiden axial benachbarten Stützschalen (2), wobei die Spiellänge zwischen einem Zehntel und einem Drittel des Schalenflanschdurchmessers beträgt, wobei über das Verhältnis zwischen der Spiellänge und dem Schalenflanschdurchmesser ein Winkel festgelegt ist, bis zu dem die beiden über die Gelenkmuffe (3) miteinander verbundenen benachbarten Stützschalen (2) mit ihren Achsen zueinander um eine radiale Richtung abwinkelbar sind, wodurch eine Verbiegung des in den Stützschalen (2) verlaufenden Kabelabschnitts auf einen entsprechenden Biegewinkel beschränkt ist.

**2.** Schutzanordnung (1) nach Anspruch 1,
**dadurch gekennzeichnet, dass**
zumindest eine der Stützschalen (2) zwei Stützhalbschalen (20) umfasst, die jeweils zwei axial verlaufende Stützstege (23) aufweisen, über die die beiden Stützhalbschalen (20) radial aneinander anliegend miteinander verbunden sind, und/oder dass zumindest eine der Gelenkmuffen (3) zwei Muffenhalbschalen (30) umfasst, die jeweils zwei axial verlaufende Muffenstege (33) aufweisen, über die die beiden Muffenhalbschalen (30) radial aneinander anliegend miteinander verbunden sind, wobei insbesondere einer der Stützstege (23) einer jeden Stützhalbschale (20) als Aufhängungssteg (24) ausgebildet ist, der eine Ausnehmung (241) aufweist, wobei insbesondere die Aufhängungsstege (24) der beiden Stützhalbschalen (20) in der Stützschale (2) so aneinander angeordnet sind, dass ihre Ausnehmungen (241) fluchten.

**3.** Schutzanordnung (1) nach einem der vorangehenden Ansprüche,
**dadurch gekennzeichnet, dass**
zumindest einer, insbesondere beide, der Muffenflansche (32) zumindest eine sich axial über die Muffenflanschlänge erstreckende Aussparung (35) aufweist zur Aufnahme eines an zumindest einer der beiden axial benachbart angeordneten Stützschalen (2) angeordneten Vorsprungs.

**4.** Schutzanordnung (1) nach einem der vorangehenden Ansprüche,
**dadurch gekennzeichnet, dass**
die Stützschalen (2) und die Gelenkmuffe (3) so zueinander ausgebildet sind, dass der Quotient

$$\frac{L_0 * D}{\Delta L}$$ größer als 3000 mm, insbesondere größer als 4000 mm beträgt, wobei $L_0$ die Schalenlänge, $\Delta L$ die Spiellänge und D den Außendurchmesser der Schalenflansche (22) bezeichnet.

**5.** Schutzanordnung (1) nach einem der vorangehenden Ansprüche,
**dadurch gekennzeichnet, dass**
die Schutzanordnung (1) zumindest einen Adapter (4) umfasst, der zum Gewährleisten einer Montage einer der Stützschalen (2) an einer Seekabelmuffe (5) ausgebildet ist, wobei der Adapter (4) einen Adapterabschnitt (41) mit einer axialen Erstreckung aufweist, an dessen erstem axialen Ende ein Adapterflansch (43) zum Fixieren des Adapters (4) an der Seekabelmuffe (5) angeordnet ist und an dessen zweitem axialen Ende ein Kopplungsflansch (42) angeordnet ist, der so korrespondierend zu der Gelenkmuffe (3) ausgebildet ist, dass er zusammen mit dem Schalenflansch (22) einer der Stützschalen (2) innerhalb der Muffenlänge axial verschiebbar anordenbar ist, wobei die Muffenflansche (32) die axiale Verschiebbarkeit dieses Schalenflanschs (22) und des Kopplungsflanschs (42) zueinander begrenzen und die Gelenkmuffe (3) den Adapter (4) mit dieser Stützschale (2) verbindet.

**6.** Schutzanordnung (1) nach Anspruch 5 umfassend die Seekabelmuffe (5), zwei Adapter (4), sowie zumindest zwei Gelenkmuffen (3), wobei über einen jeden der beiden Adapter (4) eine der Stützschalen (2) mit der Seekabelmuffe (5) verbunden ist, wobei ein erster der Adapter (4) mit seinem Adapterflansch (43) an einem ersten Ende der Seekabelmuffe (5) und ein zweiter der Adapter (4) mit seinem Adapterflansch (43) an einem zweiten Ende der Seekabelmuffe (5) angeordnet ist, wobei der Kopplungsflansch (42) des ersten Adapters (4) benachbart zu dem Schalenflansch (22) einer ersten der Stützschalen (2) innerhalb der Muffenlänge einer ersten Gelenkmuffe (3) angeordnet ist, und der Kopplungsflansch (42) des zweiten Adapters (4) benachbart zu dem Schalenflansch (22) einer zweiten der Stützschalen (2) innerhalb der Muffenlänge einer zweiten Gelenkmuffe (3) angeordnet ist.

**7.** Schutzanordnung (1) nach einem der vorangehenden Ansprüche,
**dadurch gekennzeichnet, dass**
die Schutzanordnung (1) mehrere.Montageketten (6) umfasst, die jeweils an einer der Stützschalen (2) oder einer der Gelenkmuffen (3) angeordnet sind, wobei sich insbesondere zumindest einige der Montageketten (6) in ihren Kettenlängen voneinander unterscheiden.

**8.** Schutzanordnung (1) nach Anspruch 7,
**dadurch gekennzeichnet, dass**
das Schutzsystem eine Traverse (9) aufweist, wobei die Seekabelmuffe (5) über Halteketten (7) und zumindest einige der Stützschalen (2) und/oder Gelenkmuffen (3) über die Montageketten (6) an der Traverse (9) befestigt sind, wobei mit zunehmendem Abstand der an der Traverse (9) befestigten Stützschalen (2) und/oder Gelenkmuffen (3) von der Seekabelmuffe (5) die Kettenlänge der Montageketten (6), mit der diese Stützschalen (2) und/oder Gelenkmuffen (3) an der Traverse (9) befestigt sind, zunimmt.

**9.** Schutzanordnung (1) nach Anspruch 8,
**dadurch gekennzeichnet, dass**
die Kettenlängen so angepasst sind, dass bei einem Anheben der Traverse (9) in der Vertikalen dergestalt, dass die Stützschalen (2) und/oder Gelenkmuffen (3) über die Montageketten (6) an der Traverse (9) hängend befestigt sind, die Schalenflasche (22) zweier benachbarter, über eine der Gelenkmuffen (3) verbundenen Stützschalen (2) an ihren ersten, von der Traverse (9) am weitesten beabstandeten vertikalen Enden aneinander anliegen und an ihren zweiten vertikalen Enden jeweils an einem der beiden Muffenflansche (32) der Gelenkmuffe (3) anliegen.

10. Schutzanordnung (1) nach einem der Ansprüche 7 bis 9, **dadurch gekennzeichnet, dass**
zumindest eine der Gelenkmuffen (3) oder der Stützschalen (2) über eine der Montageketten (6) und eine Anpasslasche (8) mit einer Laschenlänge an der Traverse (9) befestigt ist, wobei der Abstand dieser Gelenkmuffe (3) oder Stützschale (2) von der Traverse (9) durch die Laschenlänge und die Kettenlänge definiert ist.

11. Stützschale (2) für eine Schutzanordnung (1) gemäß einem der Ansprüche 1 bis 10, wobei die Stützschale (2) korrespondierend mit einer Gelenkmuffe (3) gemäß Anspruch 12 ausgebildet ist und einen hohlzylinderartigen Schalenabschnitt (21) aufweist, der sich axial über eine Schalenlänge zwischen zwei Schalenflanschen (22) erstreckt, wobei sich jeder der Schalenflansche (22) axial über eine Schalenflanschlänge erstreckt,
**dadurch gekennzeichnet, dass**
die Stützschale (2) dergestalt korrespondierend zu der Gelenkmuffe (3) ausgebildet sind, dass der Schalenflansch (22) zwischen den Muffenflanschen (32) der Gelenkmuffe (3) innerhalb der Muffenlänge anordenbar und zwischen den Muffenflanschen (32) axial verschiebbar ist, wobei die Muffenflansche (32) die axiale Verschiebbarkeit des Schalenflanschs (22) begrenzen, wobei die Muffenlänge um eine Spiellänge länger ist als die gemeinsame axiale Schalenflanschlänge der beiden axial benachbarten Stützschalen (2), wobei die Spiellänge zwischen einem Zehntel und einem Drittel des Schalenflanschdurchmessers beträgt, wobei über das Verhältnis zwischen der Spiellänge und dem Schalenflanschdurchmesser ein Winkel festgelegt ist, bis zu dem die beiden über die Gelenkmuffe (3) miteinander verbundenen benachbarten Stützschalen (2) mit ihren Achsen zueinander um eine radiale Richtung abwinkelbar sind, wodurch eine Verbiegung des in den Stützschalen (2) verlaufenden Kabelabschnitts auf einen entsprechenden Biegewinkel beschränkt ist.

12. Gelenkmuffe (3) für eine Schutzanordnung (1) gemäß einem der Ansprüche 1 bis 10, wobei die Gelenkmuffe (3) korrespondierend mit einer Stützschale (2) gemäß Anspruch 11 ausgebildet ist,
**dadurch gekennzeichnet, dass**
die Gelenkmuffe (3) einen hohlzylinderartigen Muffenabschnitt (31) aufweist, der sich axial über eine Muffenlänge zwischen zwei Muffenflanschen (32) erstreckt, wobei die Gelenkmuffe (3) dergestalt korrespondierend zu der Stützschale (2) ausgebildet ist, dass der Schalenflansch (22) zwischen den Muffenflanschen (32) innerhalb der Muffenlänge anordenbar und zwischen den Muffenflanschen (32) axial verschiebbar ist, wobei die Muffenflansche (32) die axiale Verschiebbarkeit des Schalenflanschs (22) begrenzen, wobei die Muffenlänge um eine Spiellänge länger ist als die gemeinsame axiale Schalenflanschlänge der beiden axial benachbarten Stützschalen (2), wobei die Spiellänge zwischen einem Zehntel und einem Drittel des Schalenflanschdurchmessers beträgt, wobei über das Verhältnis zwischen der Spiellänge und dem Schalenflanschdurchmesser ein Winkel festgelegt ist, bis zu dem die beiden über die Gelenkmuffe (3) miteinander verbundenen benachbarten Stützschalen (2) mit ihren Achsen zueinander um eine radiale Richtung abwinkelbar sind, wodurch eine Verbiegung des in den Stützschalen (2) verlaufenden Kabelabschnitts auf einen entsprechenden Biegewinkel beschränkt ist.

13. Verfahren zur Montage einer Schutzanordnung (1) an einem Seekabelabschnitt, die zum Gewährleisten eines Tragens des Seekabelabschnitts bei dem Verlegen des Seekabels (100) geeignet ist, indem die Schutzanordnung an einem Hebearm aufgehängt wird, wobei eine erste Stützschale (2) und eine zweite Stützschale (2) jeweils an dem Seekabelabschnitt angeordnet werden, wobei der Seekabelabschnitt radial innerhalb der Schalenabschnitte (21) der beiden Stützschalen (2) verläuft, wobei die Stützschalen (2) axial zueinander benachbart angeordnet werden, wobei ein Schalenflansch (22) der ersten Stützschale (2) zu einem Schalenflansch (22) der zweiten Stützschale (2) benachbart angeordnet wird,
**dadurch gekennzeichnet, dass**
eine Gelenkmuffe (3) dergestalt an den Schalenflanschen (22) der beiden axial benachbarten Stützschalen (2) angeordnet wird, dass sie die beiden Stützschalen (2) unter Fixierung ihrer benachbarten Schalenflansche (22) zueinander miteinander verbindet, wobei die Schalenflansche (22) der beiden Stützschalen (2) innerhalb einer Muffenlänge der Gelenkmuffe (3) zwischen zwei Muffenflanschen (32), die an den beiden axialen Enden des Muffenabschnitts (31) angeordnet sind, axial verschiebbar angeordnet werden, wobei die Muffenflansche (32) die axiale Verschiebbarkeit der Schalenflansche (22) begrenzen, wobei die Muffenlänge um eine Spiellänge länger ist als die gemeinsame axiale Schalenflanschlänge der beiden axial benachbarten Stützschalen (2), wobei die Spiellänge zwischen einem Zehntel und einem Drittel des Schalenflanschdurchmessers beträgt, wobei über das Verhältnis zwischen der Spiellänge und dem Schalenflanschdurchmesser ein Winkel festgelegt ist, bis zu dem die beiden über die Gelenkmuffe (3) miteinander verbundenen benachbarten Stützschalen (2) mit ihren Achsen zueinander um eine radiale Richtung abwinkelbar sind, wodurch eine Verbiegung des in den Stützschalen (2) verlaufenden Kabelabschnitts auf einen entsprechenden Biegewinkel beschränkt ist.

14. Verfahren nach Anspruch 13,
**dadurch gekennzeichnet, dass**
die Stützschalen (2) an dem Seekabelabschnitt angeordnet werden, indem zwei Stützhalbschalen (20), die jeweils zwei axial verlaufende Stützstege (23) aufweisen, radial aneinander anliegend an dem Seekabelabschnitt angeordnet werden und über ihre Stützstege (23) miteinander verbunden werden und/oder dass die Gelenkmuffe (3) an dem Seekabelabschnitt angeordnet wird, indem zwei Muffenhalbschalen (30), die jeweils zwei axial verlaufende Muffenstege (33) aufweisen, radial aneinander anliegend an dem Seekabelabschnitt angeordnet werden und über ihre Muffenstege (33) miteinander verbunden werden.

15. Verfahren nach einem der Ansprüche 13 oder 14,
**dadurch gekennzeichnet, dass**
ein Adapter (4) mit seinem Adapterflansch (43) an einem Ende einer Seekabelmuffe (5) montiert wird, in der zwei Seekabelabschnitte miteinander verbunden sind, wobei an einem Kopplungsflansch (42) des Adapters (4) eine der Stützschalen (2) mit einem ihrer Schalenflansche (22) angeordnet wird, wobei eine Gelenkmuffe (3) dergestalt an dem Schalenflansch (22) und dem Kopplungsflansch (42) angeordnet wird, dass sie den Adapter (4) mit der Stützschale (2) unter Fixierung ihrer benachbarten Flansche zueinander miteinander verbindet, wobei die Flansche innerhalb der Muffenlänge der Gelenkmuffe (3) axial zueinander verschiebbar angeordnet werden, wobei die Muffenflansche (32) der Gelenkmuffe (3) die axiale Verschiebbarkeit der Flansche begrenzen.

16. Verfahren nach Anspruch 15,
**dadurch gekennzeichnet, dass**
an beiden axialen Enden der Seekabelmuffe (5) jeweils ein Adapter (4) montiert wird, wobei jeder der Adapter (4) über eine Gelenkmuffe (3) mit jeweils einer Stützschale (2) unmittelbar verbunden wird, wobei an jeder der mit einem der Adapter (4) unmittelbar verbundenen Stützschalen (2) weitere Stützschalen (2) angeordnet werden, wobei jeweils zwei benachbarte Stützschalen (2) mit jeweils einer Gelenkmuffe (3) miteinander verbunden werden.

17. Verfahren nach Anspruch 15 oder 16,

**dadurch gekennzeichnet, dass**
einige der Stützschalen (2) und/oder einige der Gelenkmuffen (3) über jeweils eine Montagekette (6) mit einer Traverse (9) verbunden werden, wobei mit zunehmendem Abstand einer der über eine der Montageketten (6) an der Traverse (9) zu befestigenden Stützschalen (2) oder Gelenkmuffen (3) von der Seekabelmuffe (5) eine zunehmende Kettenlänge der Montagekette (6) vorgesehen wird.

## Claims

1. Protective device (1) for receiving and protecting a cable section of a submarine cable (100) and for carrying the cable section when suspending the protective device to a lifting arm when laying the submarine cable (100), the protective device (1) comprising at least two supporting shells (2), each of which has a hollow cylindrical shell portion (21) that extends axially over a shell length between two shell flanges (22), wherein each of the shell flanges (22) extends axially over a shell flange length,
**characterized in that** the protective device (1) comprises at least one joint sleeve (3) that is configured for connecting two axially adjacent supporting shells (2) by fixing their adjacent shell flanges (22) to each other, the joint sleeve (3) having a hollow cylindrical sleeve portion (31) that extends axially over a sleeve length between two sleeve flanges (32), wherein the joint sleeve (3) and the supporting shells (2) are configured corresponding with each other in such a manner that, for fixing the shell flanges (22) of the two supporting shells (2) to each other by the joint sleeve (3), the shell flanges (22) of the two axially adjacent supporting shells (2) can be placed axially displaceable to each other within the sleeve length, wherein the sleeve flanges (32) limit the axial movability of the shell flanges (22) to each other, wherein the sleeve length is longer by a clearance length than the common axial shell flange length of the two axially adjacent supporting shells (2), wherein the clearance length is set by the sleeve length and the shell flange lengths of the two shell flanges placed axially within the sleeve length of the joint sleeve and is defined as the axial distance between the two adjacent shell flanges by which they can be maximally spaced from each other at their first radial ends when their second radial ends radially opposite the first radial ends contact one another while they are fixed to one another by the joint sleeve, wherein the clearance length is between one tenth and one third of the shell flange diameter, wherein a movability of the shell flanges is set by the clearance length and thus an angle up to which the two adjacent supporting shells (2) connected to each other by the joint sleeve (3) are bendable to each other with their axes about a radial direction so that a bending of the cable portion running in the supporting shells (2) is limited to a corresponding bending angle.

2. Protective device (1) according to claim 1, **characterized in that** at one of the supporting shells (2) comprises two supporting half shells (20), each having two axially running supporting webs (23) by which the two supporting half shells (20) radially contacting each other are connected with each other and/or that at least one of the joint sleeves (3) comprises two sleeve half shells (30), each having two axially running sleeve webs (33) by which the two sleeve half shells (30) radially contacting each other are connected with each other, wherein in particular one of the supporting webs (23) of each supporting half shell (20) is configured as a suspension web (24) that has a recess (241), wherein in particular the suspension webs (24) of the two supporting half shells (20) are placed in the supporting shell (2) in such a manner that their recesses (241) are aligned.

3. Protective device (1) according to one of the preceding claims, **characterized in that** at least one, in particular the two, sleeve flange (32) has at least one recess (35) axially extending over the sleeve flange length for receiving a protrusion placed on at least one of the two supporting shells (2) placed axially adjacent to each other.

4. Protective device (1) according to one of the preceding claims, **characterized in that** the supporting shells (2) and the joint sleeve (3) are configured with respect to each other in such a manner that the quotient $\frac{L_0 * D}{\Delta L}$ is higher than 3000 mm, in particular is higher than 4000 mm, wherein $L_0$ refers to the shell length, $\Delta L$ to the clearance length and D to the outer diameter of the shell flanges (22).

5. Protective device (1) according to one of the preceding claims, **characterized in that** the protective device (1) comprises at least one adapter (4) that is configured for ensuring the mounting of one of the supporting shells (2) to a submarine cable sleeve (5), wherein the adapter (4) has an adapter portion (41) with an axial extension, an adapter flange (43) for fixing the adapter (4) to the submarine cable (5) being placed at the first axial end thereof and a coupling flange (42) being placed at the second axial end thereof, wherein the coupling flange is configured corresponding to the joint sleeve (3) in such a manner that it can be placed together with the shell flange (22) of one of the supporting shells (2) axially displaceable within the sleeve length, wherein the sleeve flanges (32) limit the axial movability of this shell flange (22) and of the coupling flange (42) to one another and the joint sleeve (3) connects the adapter (4) to this supporting shell (2).

6. Protective device (1) according to claim 5 comprising the submarine cable sleeve (5), two adapters (4) as well as at least two joint sleeves (3), wherein one of the supporting shells (2) is connected with the submarine cable sleeve (5) by each of the two adapters (4), wherein a first of the adapters (4) is placed with its adapter flange (43) at a first end of the submarine cable sleeve (5) and a second of the adapters (4) is placed with its adapter flange (43) at a second end of the submarine cable sleeve (5), wherein the coupling flange (42) of the first adapter (4) is placed adjacent to the shell flange (22) of a first of the supporting shells (2) within the sleeve length of a first joint sleeve (3) and the coupling flange (42) of the second adapter (4) is placed adjacent to the shell flange (22) of a second of the supporting shells (2) within the sleeve length of a second joint sleeve (3).

7. Protective device (1) according to one of the preceding claims, **characterized in that** the protective device (1) comprises several assembly chains (6) that are placed respectively at one of the supporting shells (2) or at one of the joint sleeves (3), wherein in particular at least some of the assembly chains (6) differ from each other in their chain lengths.

8. Protective device (1) according to claim 7, **characterized in that** the protective device has a crossbar (9), wherein the submarine cable sleeve (5) is fixed to the crossbar (9) by supporting chains (7) and at least some of the supporting shells (2) and/or joint sleeves (3) are fixed to the crossbar (9) by the assembly chains (6), wherein the chain length of the assembly chains (6) with which these supporting shells (2) and/or joint sleeves (3) are fixed to the crossbar (9) increases when the distance of the supporting shells (2) and/or joint sleeves (3) fixed to the crossbar (7) from the submarine cable sleeve (5) increases.

9. Protective device (1) according to claim 8, **characterized in that** the chain lengths are adapted in such a manner that, when lifting the crossbar (9) vertically so that the supporting shells (2) and/or the joint sleeves (3) are fixed and suspended to the crossbar (9) by the assembly chains (6), the shell flanges (22) of two adjacent supporting shells (2) connected by one of the joint sleeves (3) contact each other at their first vertical ends furthest spaced from the crossbar (9) and contact respectively one of the two sleeve flanges (32) of the joint sleeve (3) at their second vertical ends.

10. Protective device (1) according to one of the claims 7 to 9, **characterized in that** at least one of the joint sleeves (3) or of the supporting shells (2) is fixed to the crossbar (9) by one of the assembly chains (6) and a fitting lug (8) with a lug length, the distance of this joint sleeve (3) or of the supporting shell (2) from the crossbar (9) being defined by the lug length and the chain length.

11. Supporting shell (2) for a protective device (1) according to one of the claims 1 to 10, the supporting shell (2) being configured corresponding to a joint sleeve (3) according to claim 12 and having a hollow cylindrical shell portion (21) that extends axially between two shell flanges (22) over a shell length, each of the shell flanges (22) extending axially over a shell flange length, **characterized in that** the supporting shell (2) is configured corresponding to the joint sleeve (3) in such a manner that the shell flange (22) can be placed between the sleeve flanges (32) of the joint sleeve (3) within the sleeve length and is axially displaceable between the sleeve flanges (32), wherein the sleeve flanges (32) limit the axial movability of the shell flange (22), wherein the sleeve length is longer than the common axial shell flange length of the two axially adjacent supporting shells (2) by a clearance length, wherein the clearance length is set by the sleeve length and the shell flange lengths of the two shell flanges placed axially within the sleeve length of the joint sleeve and is defined as the axial distance between the two adjacent shell flanges by which they can be maximally spaced from each other at their first radial ends when their second radial ends radially opposite the first radial ends contact one another while they are fixed to one another by the joint sleeve, wherein the clearance length is between one tenth and one third of the shell flange diameter, wherein a movability of the shell flanges is set by the clearance length and thus an angle up to which the two adjacent supporting shells (2) connected to each other by the joint sleeve (3) are bendable to each other with their axes about a radial direction so that a bending of the cable portion running in the supporting shells (2) is limited to a corresponding bending angle.

12. Joint sleeve (3) for a protective device (1) according to one of the claims 1 to 10, the joint sleeve (3) being configured corresponding to a supporting shell (2) according to claim 11, **characterized in that** the joint sleeve (3) has a hollow cylindrical shell portion (31) that extends axially between two sleeve flanges (32) over a sleeve length, wherein the joint sleeve (3) is configured corresponding to the supporting shell (2) in such a manner that the shell flange (22) can be placed between the sleeve flanges (32) within the sleeve length and is axially displaceable between the sleeve flanges (32), wherein the sleeve flanges (32) limit the axial movability of the shell flange (22), wherein the sleeve length is longer than the common axial shell flange length of the two axially adjacent supporting shells (2) by a clearance length, wherein the clearance length is set by the sleeve length and the shell flange lengths of the two shell flanges placed axially within the sleeve length of the joint sleeve and is defined as the axial distance between the two adjacent shell flanges by which they can be maximally spaced from each other at their first radial ends when their second radial ends radially opposite the first radial ends contact one another while they are fixed to one another by the joint sleeve, wherein the clearance length is between one tenth and one third of the shell flange diameter, wherein a movability of the shell flanges is set by the clearance length and thus an angle up to which the two adjacent supporting shells (2) connected to each other by the joint sleeve (3) are bendable to each other with their axes about a radial direction so that a bending of the cable portion running in the supporting shells (2) is limited to a corresponding bending angle.

13. Method for mounting a protective device (1) on a submarine cable portion that is appropriate for ensuring the carrying of the submarine cable portion when laying the submarine cable (100), the protective device is suspended to a lifting arm, a first supporting shell (2) and a second supporting shell (2) are placed respectively on the submarine cable portion, the submarine cable portion running radially inside the shell portions (21) of the two supporting shells (2), the supporting shells (2) is placed axially adjacent to one another, a shell flange (22) of the first supporting shell (2) being placed adjacent to a shell flange (22) of the second supporting shell (2), **characterized in that** a joint sleeve (3) is placed on the shell flanges (22) of the two axially adjacent supporting shells (2) in such a manner that it connects the two supporting shells (2) with each other by fixing their adjacent shell flanges (22) to one another, wherein the shell flanges (22) of the two supporting shells (2) are placed within a sleeve length of the joint sleeve (3) between two sleeve flanges (32) that are placed at both axial ends of the sleeve portion (31), wherein the sleeve flanges (32) limit the axial movability of the shell flanges (22), wherein the sleeve length is longer than the common axial shell flange length of the two axially adjacent supporting shells (2) by a clearance length, wherein the clearance length is set by the sleeve length and the shell flange lengths of the two shell flanges placed axially within the sleeve length of the joint sleeve and is defined as the axial distance between the two adjacent shell flanges by which they can be maximally spaced from each other at their first radial ends when their second radial ends radially opposite the first radial ends contact one another while they are fixed to one another by the joint sleeve, wherein the clearance length is between one tenth and one third of the shell flange diameter, wherein a movability of the shell flanges is set by the clearance length and thus an angle up to which the two adjacent supporting shells (2) connected to each other by the joint sleeve (3) are bendable to each other with their axes about a radial direction so that a bending of the cable portion running in the supporting shells (2) is limited to a corresponding bending angle.

14. Method according to claim 13, **characterized in that** the supporting shells (2) are placed on the submarine cable portion, wherein two supporting half shells (20), each having two axially running supporting webs (23), are placed radially contacting each other on the submarine cable portion and are connected with each other by their supporting webs (23) and/or that the joint sleeve (3) is placed on the submarine cable portion, wherein two sleeve half shells (30), each having two axially running sleeve webs (33), are placed radially contacting each other on the submarine cable portion and are connected with each other by their sleeve webs (33).

15. Method according to one of the claims 13 or 14, **characterized in that** an adapter (4) is mounted with its adapter flange (43) at one end of a submarine cable (5) in which two submarine cable portions are connected with each other, wherein one of the supporting shells (2) is placed with one of their shell flanges (22) on a coupling flange (42) of the adapter (4), a joint sleeve (3) is placed on the shell flange (22) and the coupling flange (42) in such a manner that it connects the adapter (4) with the supporting shell (2) with each other by fixing their adjacent flanges to one another, the flanges are placed axially displaceable to each other within the sleeve length of the joint sleeve (3), the sleeve flanges (32) of the joint sleeve (3) limiting the axial movability of the flanges.

16. Method according to claim 15, **characterized in that** an adapter (4) is mounted on each of the two axial ends of the submarine cable sleeve (5), wherein each of the adapters (4) is directly connected to each supporting shell (2) by a joint sleeve (3), wherein further supporting shells (2) are placed on each of the supporting shells (2) directly connected with one of the adapters (4), wherein two adjacent supporting shells (2) are respectively connected to respectively one joint sleeve (3).

17. Method according to claim 15 or 16, **characterized in that** some of the supporting shells (2) and/or some of the joint sleeves (3) are connected to a crossbar (9) by respectively one assembly chain (6), wherein an increasing chain length of the assembly chain (6) is provided when the distance of one of the supporting shells (2) or joint sleeves (3) to be fixed on the crossbar (9) by one of the assembly chains (6) increases.

**Revendications**

1. Dispositif de protection (1) pour loger et protéger un tronçon de câble d'un câble marin (100) et pour porter le tronçon de câble lors de la suspension du dispositif de protection à un bras de levage lors de la pose du câble marin (100), le dispositif de protection (1) comprenant au moins deux coques d'appui (2) dont chacune présente une portion de coque de type cylindre creux (21) qui s'étend axialement sur une longueur de coque entre deux brides de coque (22), cependant que chacune des brides de coque (22) s'étend axialement sur une longueur de bride de coque,
**caractérisé en ce que** le dispositif de protection (1) comprend au moins un manchon d'articulation (3) qui est configuré pour relier deux coques d'appui adjacentes axialement (2) en fixant leurs brides de coques adjacentes (22) l'une par rapport à l'autre, cependant que le manchon d'articulation (3) présente un tronçon de manchon de type cylindre creux (31) qui s'étend axialement sur une longueur de manchon entre deux brides de manchon (32), cependant que le manchon d'articulation (3) et les coques d'appui (2) sont configurés en correspondant l'un à l'autre de telle manière que pour la fixation des brides de coque (22) des deux coques d'appui (2) l'une par rapport à l'autre par le manchon d'articulation (3), les brides de coque (22) des deux coques d'appui adjacentes axialement (2) peuvent être placées déplaçables axialement l'une par rapport à l'autre à l'intérieur de la longueur du manchon, cependant que les brides de manchon (32) limitent la mobilité axiale des brides de coque (22) l'une par rapport à l'autre, cependant que la longueur de manchon est d'une longueur de jeu plus longue que la longueur axiale commune des brides de coque des deux coques d'appui adjacentes axialement (2), cependant que la longueur de jeu est fixée par la longueur de manchon et les longueurs des brides de coque des deux brides de coques placées axialement à l'intérieur de la longueur de manchon du manchon d'articulation et est définie comme la distance axiale entre les deux brides de coque adjacentes dont elles peuvent être espacées au maximum l'une de l'autre à leurs premières extrémités radiales lorsque leurs secondes extrémités radiales, opposées radialement aux premières extrémités radiales, sont en contact l'une avec l'autre tandis qu'elles sont fixées l'une par rapport à l'autre par le manchon d'articulation, la longueur de jeu étant entre un dixième et un tiers du diamètre de bride de coque, cependant qu'une mobilité des brides de coque et donc un angle est fixé par la longueur de jeu, angle jusqu'auquel les deux coques d'appui adjacentes (2) reliées l'une à l'autre par le manchon d'articulation (3) avec leurs axes peuvent être coudées l'une par rapport à l'autre autour d'une direction radiale si bien qu'un pliage du tronçon de câble qui passe dans les coques d'appui (2) est limité à un angle de flexion correspondant.

2. Dispositif de protection (1) selon la revendication 1, **caractérisé en ce qu'**au moins l'une des coques d'appui (2) comprend deux moitiés de coque d'appui (20) qui présentent chacune deux entretoises d'appui dans le sens axial (23) par lesquelles les deux moitiés de coque d'appui (20) sont reliées en étant en appui radialement l'une contre l'autre et/ou qu'au moins l'un des manchons d'articulation (3) présente chacun deux moitiés de manchon (30) qui présentent chacune deux entretoises de manchon dans le sens axial (33) par lesquelles les deux moitiés de manchon (30) sont reliées en étant en appui radialement l'une contre l'autre, cependant qu'en particulier l'une des entretoises d'appui (23) de chacune des moitiés de coque d'appui (20) est configurée comme entretoise de suspension (24) qui présente une échancrure (241), cependant qu'en particulier les entretoises de suspension (24) des deux moitiés de coque d'appui (20) sont placées dans la coque d'appui (2) de telle manière que leurs échancrures (241) soient alignées.

3. Dispositif de protection (1) selon l'une des revendications précédentes, **caractérisé en ce qu'**au moins l'une des brides de manchon (32), en particulier les deux, présente une échancrure (35) qui s'étend axialement sur la longueur des brides de manchon pour loger une saillie placée sur au moins l'une des coques d'appui (2) placées adjacentes axialement.

4. Dispositif de protection (1) selon l'une des revendications précédentes, **caractérisé en ce que** les coques d'appui (2) et le manchon d'articulation (3) sont configurés l'un par rapport à l'autre de telle manière que le quotient $\dfrac{L_0 * D}{\Delta L}$ est supérieur à 3000 mm, en particulier supérieur à 4000 mm, $L_0$ désignant la longueur de coque, $\Delta L$ la longueur de jeu et $D$ le diamètre extérieur des brides de coque (22).

5. Dispositif de protection (1) selon l'une des revendications précédentes, **caractérisé en ce que** le dispositif de protection (1) comprend au moins un adaptateur (4) qui est configuré pour garantir un montage d'une des coques d'appui (2) sur un manchon de câble marin (5), l'adaptateur (4) présentant un tronçon d'adaptateur (41) avec une extension axiale, tronçon à la première extrémité axiale duquel est placée une bride d'adaptateur (43) pour fixer l'adaptateur (4) au manchon de câble marin (5) et à la seconde extrémité axiale duquel est placée une bride de couplage (42) qui est configurée en correspondant au manchon d'articulation (3) de telle manière qu'elle peut être placée déplaçable axialement ensemble avec la bride de coque (22) de l'une des coques d'appui (2) à l'intérieur de la longueur de manchon, cependant que les brides de manchon (32) limitent la mobilité axiale de cette bride de coque (22) et de la bride de couplage (42) l'une par rapport à l'autre et que le manchon d'articulation (3) relie l'adaptateur (4) à cette coque d'appui (2).

6. Dispositif de protection (1) selon la revendication 5 comprenant le manchon de câble marin (5), deux adaptateurs (4) ainsi qu'au moins deux manchons d'articulation (3), l'une des coques d'appui (2) étant reliée au manchon de câble marin (5) par chacun des deux adaptateurs (4), cependant qu'un premier des adaptateurs (4) est placé avec sa bride d'adaptateur (43) à une première extrémité du manchon de câble marin (5) et un second des adaptateurs (4) est placé avec sa bride d'adaptateur (43) à une seconde extrémité du manchon de câble marin (5), cependant que la bride de couplage (42) du premier adaptateur (4) est placée adjacente par rapport à la bride de coque (22) d'une première des coques d'appui (2) à l'intérieur de la longueur de manchon d'un premier manchon d'articulation (3) et la bride de couplage (42) du second adaptateur (4) est placée adjacente par rapport à la bride de coque (22) d'une seconde des coques d'appui (2) à l'intérieur de la longueur de manchon d'un second manchon d'articulation (3).

7. Dispositif de protection (1) selon l'une des revendications précédentes, **caractérisé en ce que** le dispositif de protection (1) comprend plusieurs chaînes de montage (6) qui sont placées respectivement sur l'une des coques d'appui (2) ou sur l'un des manchons d'articulation (3), cependant qu'en particulier au moins quelques unes des chaînes de montage (6) se distinguant l'une de l'autre par leurs longueurs de chaîne.

8. Dispositif de protection (1) selon la revendication 7, **caractérisé en ce que** le dispositif de protection présente une traverse (9), le manchon de câble marin (5) étant fixé à la traverse (9) par des chaînes de support (7) et au moins quelques unes des coques d'appui (2) et/ou des manchons d'articulation (3) étant fixés à la traverse (9) par les chaînes de montage (6) cependant que, plus la distance des coques d'appui (2) et/ou des manchons d'articulation (3) fixés à la traverse (9) augmente, avec le manchon de câble marin (5) augmente, plus la longueur de chaîne des chaînes de montage (6) avec laquelle ces coques d'appui (2) et/ou ces manchons d'articulation (3) sont fixés à la traverse (9) augmente.

**9.** Dispositif de protection (1) selon la revendication 8, **caractérisé en ce que** les longueurs de chaîne sont adaptées de telle manière que, lors d'un soulèvement de la traverse (9) à la verticale de telle manière que les coques d'appui (2) et/ou les manchons d'articulation (3) sont fixés en suspension à la traverse (9) par les chaînes de montage (6), les brides de coque (22) de deux coques d'appui adjacentes (2), reliées par l'un des manchons d'articulation (3), sont en contact l'une avec l'autre à leurs premières extrémités verticales les plus espacées de la traverse (9) et sont en contact respectivement avec l'une des deux brides de manchon (32) du manchon d'articulation (3) à leurs secondes extrémités verticales.

**10.** Dispositif de protection (1) selon l'une des revendications 7 à 9, **caractérisé en ce qu'**au moins l'un des manchons d'articulation (3) ou des coques d'appui (2) est fixé à la traverse (9) par l'une des chaînes de montage (6) et une patte d'adaptation (8) avec une longueur de patte, la distance de ce manchon d'articulation (3) ou de cette coque d'appui (2) avec la traverse (9) étant définie par la longueur de patte et la longueur de chaîne.

**11.** Coque d'appui (2) pour un dispositif de protection (1) selon l'une des revendications 1 à 10, la coque d'appui (2) étant configurée correspondante à un manchon d'articulation (3) selon la revendication 12 et présentant une portion de coque de type cylindre creux (21) qui s'étend axialement sur une longueur de coque entre deux brides de coque (22), cependant que chacune des brides de coque (22) s'étend axialement sur une longueur de bride de coque, **caractérisée en ce que** la coque d'appui (2) est configurée correspondant au manchon d'articulation (3) de telle manière que la bride de coque (22) peut être placée entre les brides de manchon (32) du manchon d'articulation (3) à l'intérieur de la longueur de manchon et est déplaçable axialement entre les brides de manchon (32), les brides de manchon (32) limitant la mobilité axiale de la bride de coque (22), la longueur de manchon étant d'une longueur de jeu plus longue que la longueur de bride de coque axiale commune des deux coques d'appui adjacentes axialement, cependant que la longueur de jeu est fixée par la longueur de manchon et les longueurs des brides de coque des deux brides de coques placées axialement à l'intérieur de la longueur de manchon du manchon d'articulation et est définie comme la distance axiale entre les deux brides de coque adjacentes dont elles peuvent être espacées au maximum l'une de l'autre à leurs premières extrémités radiales lorsque leurs secondes extrémités radiales, opposées radialement aux premières extrémités radiales, sont en contact l'une avec l'autre tandis qu'elles sont fixées l'une par rapport à l'autre par le manchon d'articulation, la longueur de jeu étant entre un dixième et un tiers du diamètre de bride de coque, cependant qu'une mobilité des brides de coque et donc un angle est fixé par la longueur de jeu, angle jusqu'auquel les deux coques d'appui adjacentes (2) reliées l'une à l'autre par le manchon d'articulation (3) avec leurs axes peuvent être coudées l'une par rapport à l'autre autour d'une direction radiale si bien qu'un pliage du tronçon de câble qui passe dans les coques d'appui (2) est limité à un angle de flexion correspondant.

**12.** Manchon d'articulation (3) pour un dispositif de protection (1) selon l'une des revendications 1 à 10, le manchon d'articulation (3) étant configuré correspondant à une coque d'appui (2) selon la revendication 11, **caractérisé en ce que** le manchon présente un tronçon de manchon de type cylindre creux (31) qui s'étend axialement sur une longueur de manchon entre deux brides de manchon (32), cependant que le manchon d'articulation (3) est configuré correspondant à la coque d'appui de telle manière que la bride de coque (22) peut être placée entre les brides de manchon (32) du manchon d'articulation (3) à l'intérieur de la longueur de manchon et est déplaçable axialement entre les brides de manchon (32), les brides de manchon (32) limitant la mobilité axiale de la bride de coque (22), la longueur de manchon étant d'une longueur de jeu plus longue que la longueur de bride de coque axiale commune des deux coques d'appui adjacentes axialement, cependant que la longueur de jeu est fixée par la longueur de manchon et les longueurs des brides de coque des deux brides de coques placées axialement à l'intérieur de la longueur de manchon du manchon d'articulation et est définie comme la distance axiale entre les deux brides de coque adjacentes dont elles peuvent être espacées au maximum l'une de l'autre à leurs premières extrémités radiales lorsque leurs secondes extrémités radiales, opposées radialement aux premières extrémités radiales, sont en contact l'une avec l'autre tandis qu'elles sont fixées l'une par rapport à l'autre par le manchon d'articulation, la longueur de jeu étant entre un dixième et un tiers du diamètre de bride de coque, cependant qu'une mobilité des brides de coque et donc un angle est fixé par la longueur de jeu, angle jusqu'auquel les deux coques d'appui adjacentes (2) reliées l'une à l'autre par le manchon d'articulation (3) peuvent être coudées l'une par rapport à l'autre avec leurs axes autour d'une direction radiale si bien qu'un pliage du tronçon de câble qui passe dans les coques d'appui (2) est limité à un angle de flexion correspondant.

**13.** Procédé pour le montage d'un dispositif de protection (1) sur un tronçon de câble marin qui est approprié pour garantir le port du tronçon de câble marin lors de la pose du câble marin (100), le dispositif de protection étant suspendu à un bras de levage, une première coque d'appui (2) et une seconde coque d'appui (2) sont placées respectivement sur le tronçon de câble marin, cependant que le tronçon de câble marin passe radialement à l'intérieur des portions de coque (21) des deux coques d'appui (2), les coques d'appui (2) sont placées adjacentes axialement l'une de l'autre, une bride de coque (22) de la première coque d'appui (2) est placée adjacente par rapport à une bride de coque (22) de la seconde coque d'appui (2),

**caractérisé en ce qu'**un manchon d'articulation (3) est placé sur les brides de coque (22) des deux coques d'appui adjacentes axialement (2) de telle manière qu'il relie les deux coques d'appui l'une à l'autre en fixant leurs brides de coque adjacentes (22) l'une par rapport à l'autre, les brides de coque (22) des deux coques d'appui (2) sont placées déplaçables axialement à l'intérieur d'une longueur de manchon du manchon d'articulation (3) entre deux brides de manchon (32) qui sont placées aux deux extrémités axiales du tronçon de manchon (31), cependant que les brides de manchon (32) limitent la mobilité axiale des brides de coque (22), la longueur de manchon étant d'une longueur de jeu plus longue que la longueur de bride de coque axiale commune des deux coques d'appui adjacentes axialement, cependant que la longueur de jeu est fixée par la longueur de manchon et les longueurs des brides de coque des deux brides de coques placées axialement à l'intérieur de la longueur de manchon du manchon d'articulation et est définie comme la distance axiale entre les deux brides de coque adjacentes dont elles peuvent être espacées au maximum l'une de l'autre à leurs premières extrémités radiales lorsque leurs secondes extrémités radiales, opposées radialement aux premières extrémités radiales, sont en contact l'une avec l'autre tandis qu'elles sont fixées l'une par rapport à l'autre par le manchon d'articulation, la longueur de jeu étant entre un dixième et un tiers du diamètre de bride de coque, cependant qu'une mobilité des brides de coque et donc un angle est fixé par la longueur de jeu, angle jusqu'auquel les deux coques d'appui adjacentes (2) reliées l'une à l'autre par le manchon d'articulation (3) avec leurs axes peuvent être coudées l'une par rapport à l'autre autour d'une direction radiale si bien qu'un pliage du tronçon de câble qui passe dans les coques d'appui (2) est limité à un angle de flexion correspondant.

14. Procédé selon la revendication 13, **caractérisé en ce que** les coques d'appui (2) sont placées sur le tronçon de câble marin, deux moitiés de coque d'appui (20) qui présentent chacune deux entretoises d'appui dans le sens axial (23) sont placées sur le tronçon de câble marin en étant en appui radialement l'une contre l'autre et sont reliées l'une à l'autre par leurs entretoises d'appui (23) et/ou que le manchon d'articulation (3) est placé sur le tronçon de câble marin, deux moitiés de manchon (30) qui présentent chacune deux entretoises de manchon dans le sens axial (33) sont placées sur le tronçon de câble marin en étant en appui radialement l'une contre l'autre et sont reliées l'une à l'autre par leurs entretoises de manchon (33).

15. Procédé selon l'une des revendications 13 ou 14, **caractérisé en ce qu'**un adaptateur (4) est monté avec sa bride d'adaptateur (43) à une extrémité d'un manchon de câble marin (5) dans lequel deux tronçons de câble marin sont reliés l'un à l'autre, cependant que l'une des coques d'appui (2) est placée avec l'une de ses brides de coque (22) sur une bride de couplage (42) de l'adaptateur (4), cependant qu'un manchon d'articulation (3) est placé sur la bride de coque (22) et la bride de couplage (42) de telle manière qu'il relie l'adaptateur (4) à la coque d'appui (2) en fixant leurs brides adjacentes l'une par rapport à l'autre, les brides sont placées déplaçables axialement l'une par rapport à l'autre à l'intérieur de la longueur de manchon, les brides de manchon (32) du manchon d'articulation (3) limitant la mobilité axiale des brides.

16. Procédé selon la revendication 15, **caractérisé en ce qu'**un adaptateur (4) est monté respectivement aux deux extrémités axiales du manchon de câble marin (5), cependant que chacun des adaptateurs (4) est relié directement respectivement à une coque d'appui (2) par un manchon d'articulation (3), cependant que d'autres coques d'appui (2) sont placées sur chacune des coques d'appui (2) reliées directement à l'un des adaptateurs (4), deux coques d'appui adjacentes (2) sont reliées à respectivement un manchon d'articulation (3).

17. Procédé selon la revendication 15 ou 16, **caractérisé en ce que** quelques unes des coques d'appui (2) et/ou quelques uns des manchons d'articulation (3) sont reliés à une traverse (9) par respectivement une chaîne de montage (6), cependant qu'une longueur de chaîne croissante de la chaîne de montage (6) est prévue avec une distance croissante de l'une des coques d'appui (2) devant être fixées à la traverse (9) par l'une des chaînes de montage (6).

**Figur 1**

EP 2 953 220 B1

## Figur 2

## Figur 3a

## Figur 3b

**Figur 4a**

22
20
23
24
242
241
21
22

**Figur 4b**

20
22
23
242
241
24

**Figur 5a**

30
33
33
34
34
32
35

**Figur 5b**

30
35
32
31
33
33
35
32

EP 2 953 220 B1

Figur 7b

Figur 7a

Figur 6b

Figur 6a

**IN DER BESCHREIBUNG AUFGEFÜHRTE DOKUMENTE**

**In der Beschreibung aufgeführte Patentdokumente**

- JP 2008245341 A